# EUROPEAN PATENT SPECIFICATION

(11) **EP 4 386 237 B1**
(45) Date of publication and mention of the grant of the patent: **12.11.2025**
(21) Application number: 23804889.6
(22) Date of filing: 05.01.2023
(51) Int. Cl.: F16K 3/02, F23K 5/00

(54) **GEAR SWITCH FOR PLUG VALVE, PLUG VALVE AND GAS APPARATUS**
GANGSCHALTER FÜR EIN STECKVENTIL, STECKVENTIL UND GASGERÄT
COMMUTATEUR À ENGRENAGES POUR ROBINET À TOURNANT, ROBINET À TOURNANT ET APPAREIL À GAZ

(30) Priority: 26.10.2022 CN 202211321560; 26.10.2022 CN 202222838329 U; 26.10.2022 CN 202222838342 U
(43) Date of publication of application: 19.06.2024
(73) Proprietor: Wuhu Midea Smart Kitchen Appliance Manufacturing Co., Ltd., Wuhu, Anhui 241000 (CN)
(72) Inventor: HUANG, Huahong, Anhui 241000 (CN); QI, Zhengsheng, Anhui 241000 (CN); YANG, Daoping, Anhui 241000 (CN); ZHANG, Yibin, Anhui 241000 (CN); HE, Hongjian, Anhui 241000 (CN)
(74) Representative: Whitlock, Holly Elizabeth Ann
(86) International application number: PCT/CN2023/070733
(87) International publication number: WO 2024/087397

(56) References cited:
- CN-A- 106 091 032
- CN-A- 113 819 270
- CN-A- 113 819 296
- CN-A- 113 819 296
- CN-A- 114 719 073
- CN-U- 207 777 683
- CN-U- 209 990 992
- JP-A- 2020 016 252

## Description

### FIELD

The present invention relates to the field of stove technologies, and in particular, to a gear switch for a plug valve, a plug valve with the gear switch, and a gas device with the plug valve.

### BACKGROUND

In the related art, the gear switch has a complex structure and unstable flame intensity adjustment, resulting in poor user experience. CN113819296A relates generally to a damping switch designed to simplify the process of adjusting the flame intensity of a plug valve in a gas appliance. CN114719073A relates generally to a gear regulator, a gas valve and a gas cooker. CN106091032A relates generally to a gas stove switch capable of adjusting in multiple sections. CN114719073A provides the basis for the two-part form of claim 1.

### SUMMARY

Aspects of the invention are set out in the claims. In the following, each of the described methods, apparatuses, embodiments, examples, and aspects, which do not fully correspond to the invention as defined in the claims is thus not according to the invention and is, as well as the whole following description, present for illustration purposes only or to highlight specific aspects or features of the claims. Embodiments not falling under the scope of the claims should be interpreted as examples useful for understanding the invention. The present invention aims to solve at least one of the technical problems in the related art to some extent. To this end, one embodiment of the present invention proposes a gear switch for a plug valve, capable of integrating an adjustment structure into the gear switch. In this way, improvement of structural compactness of the plug valve and spatial arrangement are facilitated.

Another embodiment of the present invention proposes a gear switch.

The other embodiment of the present invention proposes a gas device.

In a gear switch for a plug valve according to the present invention, the plug valve includes a valve body, a valve core, and a valve stem. The valve body has an inlet and an outlet. The valve core is disposed in the valve body and is configured to adjust an opening degree between the inlet and the outlet through rotating. The valve stem is connected to the valve core and is configured to drive the valve core. The gear switch includes a base, a rotation block, and a positioning structure. The base has a receiving hole. The rotation block is rotatably disposed in the receiving hole and has a mounting hole configured to cooperate with the valve stem to allow the rotation block to rotate along with the valve stem. The positioning structure is disposed at the base and is configured to position the rotation block.

According to the present invention, the gear switch further includes a cover plate covering an end of the base.

The cover plate has an engagement hole. A peripheral rim of the engagement hole covers a part of the receiving hole, and the engagement hole faces towards the mounting hole.

Another end of the base is provided with a positioning protrusion.

The positioning protrusion extends into the receiving hole.

The positioning protrusion is opposite to the cover plate in a thickness direction of the base to position the rotation block.

In some embodiments, the cover plate is provided with a plurality of positioning hooks at a peripheral edge of the cover plate. The plurality of positioning hooks are arranged at intervals in a circumferential direction of the cover plate.

In some embodiments, the base has a plurality of snap grooves formed at an outer peripheral surface of the base. The plurality of snap grooves is arranged at intervals in a circumferential direction of the base.

In some embodiments, the plurality of positioning hooks correspond to the plurality of snap grooves, respectively.

In some embodiments, each of the plurality of positioning hooks is embedded into a corresponding one of the plurality of snap grooves and is snap-fitted with the base.

According to the invention, the rotation block has a first positioning groove. The first positioning groove extends around the mounting hole.

Two ends of the first positioning groove are separated by a first stop block.

The cover plate is provided with a first positioning portion.

The first positioning portion is embedded into the first positioning groove. The first positioning portion is movable along the first positioning groove and adapted to be stopped by the first stop block.

In some embodiments, the rotation block is provided with a first positioning flange. The first positioning flange extends around the mounting hole.

In some embodiments, the first positioning flange is rotatably lined on an inner side of the engagement hole.

In some embodiments, the rotation block is provided with a second positioning flange. The second positioning flange extends around the mounting hole.

In some embodiments, the second positioning flange is rotatably lined on an inner side of the positioning protrusion.

In some embodiments, the rotation block has a plurality of limit grooves formed at an outer peripheral surface of the rotation block.

In some embodiments, the plurality of limit grooves is arranged at intervals in a circumferential direction of the rotation block.

In some embodiments, the positioning structure includes a ball removably embedded into the limit groove in a radial direction of the rotation block to position the rotation block.

In some embodiments, the positioning structure includes a first elastic member connected to the ball.

In some embodiments, the elastic member is configured to exert a force to push the ball in a radial direction of the rotation block to allow the ball to be embedded into the limit groove.

In some embodiments, an inner circumferential surface of the receiving hole has a recession cavity. The ball is embedded into the recession cavity and at least partially protrudes from an inner peripheral surface of the base to be embedded into the limit groove.

In some embodiments, the elastic member is embedded into the recession cavity and supported between the ball and the base.

In some embodiments, the mounting hole is constructed into a non-circular hole shape.

In some embodiments, the gear switch further includes an ignition switch fixedly connected to the base.

In some embodiments, a housing of the ignition switch and the base are integrally formed.

In some embodiments, the ignition switch is arranged side by side with the base.

In some embodiments, the recession hole is formed between the ignition switch and the base. An actuation portion of the ignition switch is located at a side of the ignition switch close to the recession hole.

In some embodiments, the gear switch further includes a transmission rod passing through the recession hole and having an end configured to be connected to the valve stem and another end facing towards the actuation portion and configured to trigger the ignition switch when the valve stem is pressed.

A plug valve according to the present invention includes a valve body, a valve core, a valve stem, and the gear switch for the plug valve described above. The valve body has an inlet and an outlet. The valve core is disposed in the valve body and is configured to adjust an opening degree between the inlet and the outlet through rotating. The valve stem is connected to the valve core and is configured to drive the valve core. The valve stem is connected to the rotation block.

In some embodiments, the valve body has a receiving cavity. The valve core is disposed in the receiving cavity.

In some embodiments, the plug valve further includes a valve seat covering the receiving cavity and positioning the valve core.

In some embodiments, the valve stem has an end extending into the valve seat to be connected to the valve core and another end extending out of the valve seat.

In some embodiments, the base is stacked at an outer side of the valve seat.

In some embodiments, an inner side surface of the valve seat has a second positioning groove. The second positioning groove extends in a circumferential direction of the valve seat.

In some embodiments, two ends of the second positioning groove are separated by a second stop block.

In some embodiments, an end of the valve stem extending into the inner side of the valve seat is provided with a second positioning portion. The second positioning portion is embedded into the second positioning groove, and the second positioning portion is movable along the second positioning groove and is adapted to be stopped by the second stop block.

In some embodiments, the valve stem is movably connected to the valve core in an axial direction of the valve stem. The valve stem and the valve core are positioned in the axial direction of the valve stem. The valve body is provided with a second elastic member. The second elastic member is configured to exert a force to push the valve stem to extend out of the valve seat. The second positioning groove has child lock groove formed at an inner top surface of the second positioning groove. The second positioning portion is embedded into the child lock groove when the inlet and the outlet are partitioned by the valve core.

In some embodiments, the plug valve further includes the valve seat and the gear switch. The valve seat covers the valve body. The valve core is disposed between the valve body and the valve seat.

In some embodiments, the base and the valve seat are of a split structure, and the base is stacked at a side of the valve seat facing away from the valve body and snapped to the valve seat. The rotation block is rotatably embedded into the base. The positioning structure is disposed at the base and is configured to position the rotation block.

In some embodiments, the valve stem is inserted into the valve seat in the axial direction of the valve stem and connected to the valve core to drive the valve core, and the valve stem is in transmission connection with the rotation block.

In some embodiments, one of the valve seat and the base is provided with a positioning post; and the other one of the valve seat and the base has a positioning hole. The positioning post extends axially and is embedded into the positioning hole in the axial direction.

In some embodiments, the positioning post is fit with the positioning hole to position the base and the valve seat.

In some embodiments, the positioning post is in interference fit with the positioning hole.

In some embodiments, a free end of the positioning post is configured as a wedged surface tapering from an outer peripheral surface of the positioning post away from a fixing end of the positioning post.

In some embodiments, a radial dimension of the free end of the positioning post is smaller than a radial dimension of the positioning hole.

In some embodiments, a plurality of positioning posts is provided, and a plurality of positioning holes is provided and correspond to the plurality of the positioning post. The plurality of positioning posts being embedded into the corresponding positioning holes.

In some embodiments, a side of the base is provided with a jaw; and the valve seat is provided with a limit protrusion.

In some embodiments, the jaw has an opening facing towards the limit protrusion in the axial direction, and the jaw is configured to be snapped with the limit protrusion in the axial direction.

In some embodiments, the jaw includes a first hook portion and a second hook portion. An end of the first hook portion is connected to an end of the second hook portion and connected to the base. Another end of the first hook portion and another end of the second hook portion extends towards the limit protrusion in the axial direction and are spaced apart from each other.

In some embodiments, the first hook portion and the second hook portion are configured to be snapped with two opposite sides of the limit protrusion, respectively.

In some embodiments, the first hook portion is provided with a first handle portion. The first handle portion is connected to a middle part of the first hook portion in the axial direction. The first handle portion extends in an axial direction facing away from the valve seat and is spaced apart from the first hook portion.

In some embodiments, the first handle portion is disposed at a side of the first hook portion facing away from the second hook portion.

In some embodiments, the second hook portion is provided with a second handle portion. The second handle portion is connected to a middle part of the second hook portion in the axial direction. Then second handle portion extends in the axial direction facing away from the valve seat and is spaced apart from the second hook portion.

In some embodiments, the second handle portion is disposed at a side of the second hook portion facing away from the first hook portion.

In some embodiments, the gear switch further includes an ignition switch. The ignition switch is fixedly connected to the base.

In some embodiments, the jaw and the ignition switch are disposed at two opposite sides of the base, respectively.

In some embodiments, the two opposite sides of the base are provided with a first buckle and a second buckle, respectively. Each of the first buckle and the second buckle has an end connected to the base and another end extending towards the valve seat in the axial direction.

In some embodiments, the valve seat is provided with a first lug and a second lug. The first lug faces towards the first buckle in the axial direction, and the second lug faces towards the second buckle in the axial direction. The first buckle is configured to be snapped into the first lug in the axial direction, and the second buckle is configured to be snapped into the second lug in the axial direction.

In some embodiments, in an axial direction facing away from the base, the first buckle and the second buckle are inclined in a direction facing away from each other.

In some embodiments, the first lug has a first positioning hole. The first positioning hole is constructed as an inclined hole inclined relative to the axial direction.

In some embodiments, an inclination direction of the first positioning hole is the same as an inclination direction of the first buckle.

In some embodiments, the second lug has a second positioning hole. The second positioning hole is constructed as an inclined hole inclined relative to the axial direction. An inclination direction of the second positioning hole is the same as an inclination direction of the second buckle.

In some embodiments, a gas device according to the present invention includes the plug valve described above.

### BRIEF DESCRIPTION OF THE DRAWINGS

FIG. 1 is a schematic structural diagram of a plug valve according to some embodiments of the present invention.
FIG. 2 is a schematic structural diagram of a gear switch according to some embodiments of the present invention.
FIG. 3 is a schematic structural diagram of a gear switch in some embodiments of the present invention (the cover plate is not illustrated).
FIG. 4 is an exploded view of a gear switch according to some embodiments of the present invention.
FIG. 5 is a schematic structural diagram of a rotation block in some embodiments of the present invention.
FIG. 6 is a schematic structural diagram of a cover plate according to some embodiments of the present invention.
FIG. 7 is a schematic structural diagram of a valve body according to some embodiments of the present invention.
FIG. 8 is a schematic structural diagram of a valve stem according to some embodiments of the present invention.
FIG. 9 is a schematic structural diagram of a valve seat according to some embodiments of the present invention.
FIG. 10 is a schematic structural diagram of a plug valve according to some embodiments of the present invention.
FIG. 11 is an exploded view of FIG. 10.
FIG. 12 is a schematic structural diagram of a gear switch in some embodiments of the present invention.
FIG. 13 is a side view of FIG. 12.
FIG. 14 is an exploded view of FIG. 12 (illustrating a positioning structure).
FIG. 15 is a schematic structural diagram of a valve seat according to some embodiments of the present invention.
FIG. 16 is a schematic structural diagram of a valve seat according to some embodiments of the present invention.
FIG. 17 is a schematic structural diagram of a plug valve according to some other embodiments of the present invention.
FIG. 18 is a bottom view of a gear switch according to some other embodiments of the present invention.
FIG. 19 is a schematic structural diagram of a valve seat according to some other embodiments of the present invention.

### Reference numerals:

100, plug valve; 1, gear switch; 11, base; 101: receiving hole; 110, positioning hole; 12, rotation block; 102, mounting hole; 13, positioning structure; 131, ball: 132, first elastic member; 14, ignition switch; 15, cover plate; 151, first positioning portion; 103, engagement hole; 111, positioning protrusion; 152, positioning hook; 104, snap groove; 105, first positioning groove; 121, first stop block; 123, first positioning flange; 106, limit groove; 107, recession cavity; 108, recession hole; 16, transmission rod; 17, positioning post; 171, wedged surface; 18, jaw; 181, first hook portion; 182, second hook portion; 183, first handle portion; 184, second handle portion; 185, buckle; 186, limit portion; 191, first buckle; 192, second buckle; 2, valve body; 20, receiving cavity; 201, first gas outlet channel; 202, second gas outlet channel; 203, inlet; 204, outlet; 3, valve core; 31, valve needle; 4, valve stem; 41, second positioning portion; 5, valve seat; 50, second positioning groove; 51, second stop block; 53, limit protrusion; 551, first lug; 552, second lug; 501, first positioning hole; 502, second positioning hole; 510, child lock groove; 6, shifter lever; 7, bottom cover; 8, solenoid valve; 9, seal gasket; and 10, trimmer screw.

### DETAILED DESCRIPTION OF THE EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present invention.

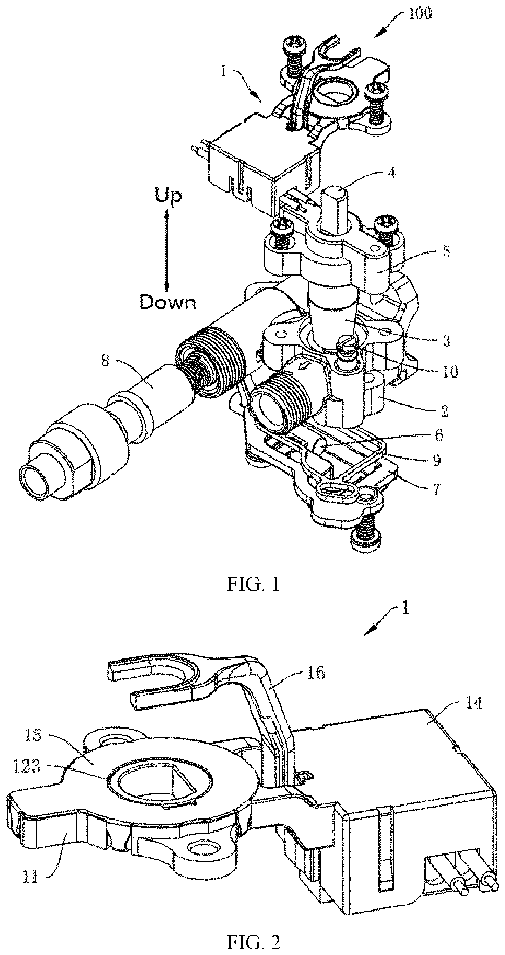

Referring to FIG. 1 to FIG. 9, in a gear switch 1 for a plug valve according to the embodiments of the present invention, a plug valve 100 includes a valve body 2, a valve core 3 and a valve stem 4. The valve body 2 has an inlet 203 and an outlet 204. The valve core 3 is disposed in the valve body 2 and is configured to adjust an opening degree between the inlet 203 and the outlet 204 through rotating. The valve stem 4 is connected to the valve core 3 and is configured to drive the valve core 3, and therefore the valve core 3 can rotate in the valve body 2 to be adapted to adjust a flow rate output.

Further, the gear switch 1 includes: a base 11, a rotation block 12, and a positioning structure 13. The base 11 has a receiving hole 101. The rotation block 12 is rotatably disposed in the receiving hole 101 and has a mounting hole 102 configured to cooperate with the valve stem 4 to allow the rotation block 12 to rotate along with the valve stem 4. That is, the rotation block 12 may be mounted in the base 11 and has the mounting hole 102. The valve stem 4 cooperates with the mounting hole 102, to connect the valve stem 4 to the rotation block 12. When a user rotates the valve stem 4, the rotation block 12 can rotate in the base 11. The positioning structure 13 is disposed at the base 11 and is configured to position the rotation block 12, which can improve a stability of the rotation block 12 during rotation of the rotation block 12. After the rotation block 12 rotates, the positioning structure 13 can also keep the rotation block 12 in a stable state, which facilitates improvement of an adjustment effect. In some embodiments, the user rotates the valve stem 4 to drive the valve core 3 to rotate, and when the valve core 3 rotates to different positions or angles, the opening degree between the inlet 203 and the outlet 204 can be changed to realize flame intensity adjustment.

In the process that the valve stem 4 drives the valve core 3 to rotate, the rotation block 12 can cooperate with the valve stem 4 to rotate, and the positioning structure 13 is adapted to position a position of the rotation block 12. Therefore, when the rotation block 12 rotates, the positioning structure 13 can serve a function of limiting and positioning. Thus, the user can conveniently rotate the valve core 3 to a predetermined or target position and maintain the valve core 3 at a predetermined or target position. In this way, the adjustment effect can be improved. In addition, the rotation block 12 and the positioning structure 13 are both disposed in the base 11, which facilitates improvement of compactness of arrangement of the gear switch 1.

In the gear switch 1 for the plug valve according to the embodiments of the present invention, the rotation block 12 is disposed in the base 11, and therefore the adjustment structure can be integrated into the gear switch 1. In this way, improvement of structural compactness of the plug valve 100 and spatial arrangement are facilitated.

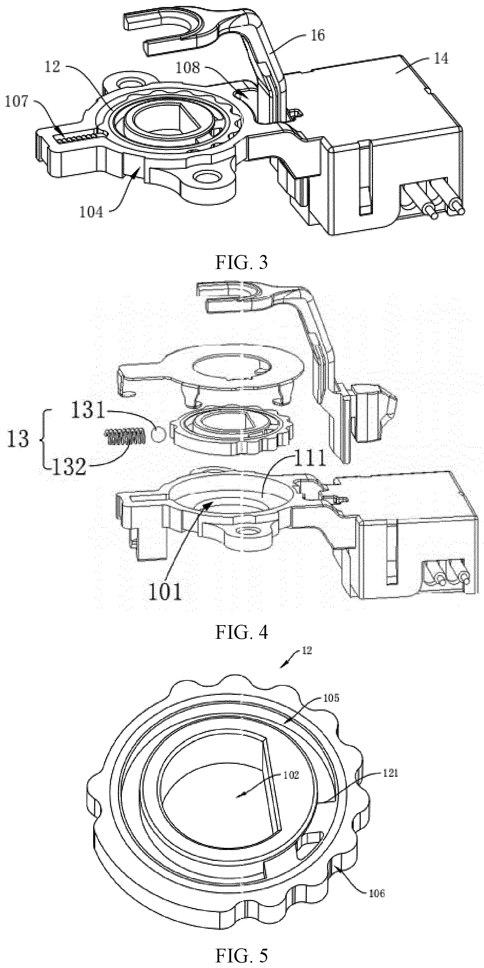

Referring to FIG. 1 and FIG. 4, in some embodiments of the present invention, the gear switch 1 further includes a cover plate 15 covering an end of the base 11 and having an engagement hole 103. A peripheral rim of the engagement hole 103 covers a part of the receiving hole 101, and the engagement hole 103 faces towards the mounting hole 102. Therefore, the cover plate 15 can cover a part of the rotation block 12. Thus, the rotation block 12 and the positioning structure 13 can be restricted in the base 11. In this way, structural stability of the base 11 is improved after the base 11 is mounted. Furthermore, the valve stem 4 can pass through the engagement hole 103 after the valve stem 4 cooperates with the mounting hole 102. In some embodiments, another end of the base 11 is provided with a positioning protrusion 111. The positioning protrusion 111 extends into the receiving hole 101 and is opposite to the cover plate 15 in a thickness direction of the base 11 to position the rotation block 12. Therefore, limiting and positioning effects of the base 11 on the rotation block 12 can be improved. Thus, the cover plate 15 and the base 11 can serve a function of limiting and positioning at end portions of two sides of the rotation block 12. In this way, the rotation block 12 can be positioned between the end of the base 11 and the other end of the base 11. As a result, the structural stability is enhanced.

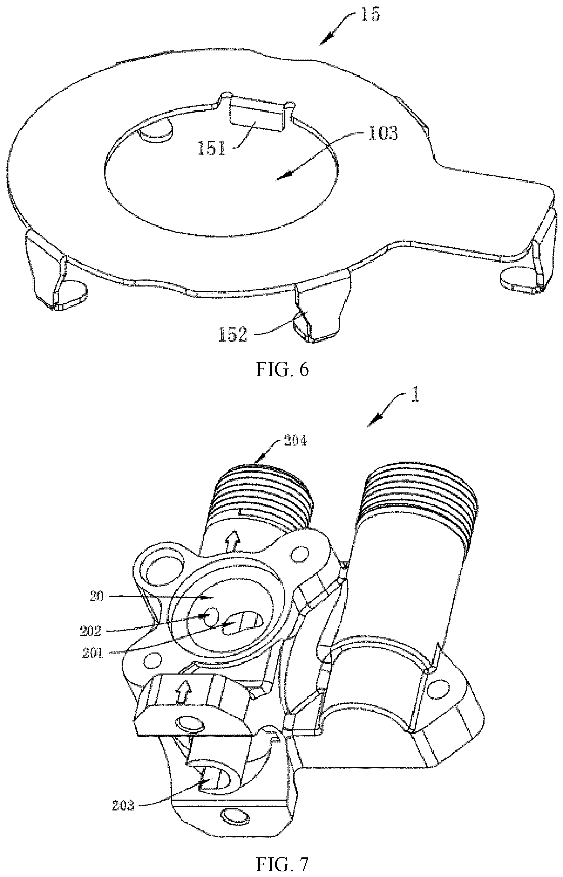

Referring to FIG. 6, further, in some embodiments of the present invention, the cover plate 15 is provided with a plurality of positioning hooks 152 at a peripheral edge of the cover plate 15. The plurality of positioning hooks 152 is arranged at intervals in a circumferential direction of the cover plate 15. The base 11 has a plurality of snap grooves 104 formed at an outer peripheral surface of the base 11. The plurality of snap grooves 104 is arranged at intervals in a circumferential direction of the base11. The plurality of positioning hooks 152 corresponds to the plurality of snap grooves 104, respectively. The plurality of positioning hooks 152 is embedded into a corresponding one of the plurality of snap grooves 104 and in snap-fit with the base 11. In this way, stability of a connection between the cover plate 15 and the base 11 can be improved. Moreover, the structure is simple, which is easy in assembly. In some embodiments, the cover plate 15 can cover an end portion of the base 11, and the cover plate 15 can be connected to the peripheral surface of the base 11 through the plurality of positioning hooks 152 at the peripheral edge of the cover plate 15. Therefore, the stability of the connection between the cover plate 15 and the base 11 is improved. Thus, improvement of an overall structural strength of the gear switch 1 is facilitated. That is, the positioning hook 152 is embedded in the snap groove 104 to be in snap-fit with the base 11, and therefore the cover plate 15 can be prevented from shaking in the circumferential direction thereof. In this way, the structural stability is improved, and flatness of the peripheral surface of the base can also be improved.

According to the gear switch 1 of a specific embodiment of the present invention, the positioning hook 152 may include a plate portion and a hook portion. The plate portion and the hook portion are connected in an "L" shape. The plate portion is adapted to be embedded into the snap groove 104, and the hook portion is adapted to abut against the end portion of the base 11. In this way, the cover plate 15 can cooperate with a plurality of surfaces of the base 11 through the positioning hook 152. Therefore, the structural stability is improved. In addition, after the positioning hook 152 is mounted, improvement of cooperating stability is facilitated. Furthermore, a thickness of the outer peripheral surface of the base 11 cannot be increased. Thus, the spatial arrangement is facilitated.

Referring to FIG. 5 and FIG. 6, in some embodiments of the present invention, the rotation block 12 has a first positioning groove 105. The first positioning groove 105 extends around the mounting hole 102, and two ends of the first positioning groove 105 are separated by a first stop block 121. The cover plate 15 is provided with a first positioning portion 151. The first positioning portion 151 is embedded in the first positioning groove 105, and the first positioning portion 151 is movable along the first positioning groove 105 and adapted to be stopped by the first stop block 121 to form a limit position that limits rotation of the rotation block 12 to restrict a rotation range of the rotation block 12. In some embodiments, after the cover plate 15 is assembled, the first positioning portion 151 is disposed opposite to the first positioning groove 105 and movably extends into the first positioning groove 105. When the rotation block 12 rotates in the receiving hole 101, the first stop block 121 rotates in a circumferential direction of the rotation block 12, and the first stop block 121 interferes with the first positioning portion 151 to limit the rotation block 12 to continue to rotate.

Referring to FIG. 2, in some embodiments of the present invention, the rotation block 12 is provided with a first positioning flange 123. The first positioning flange 123 extends around the mounting hole 102 and is rotatably lined on an inner side of the engagement hole 103, and therefore assembly stability can be improved. Especially when the rotation block 12 rotates, the first positioning flange 123 is sleeved on and connected to the inner side of the engagement hole 103, and therefore the rotation block 12 can be prevented from shaking in the circumferential direction of the rotation block 12, which facilitates improvement of an operation effect.

In some embodiments of the present disclosure, the rotation block 12 is provided with a second positioning flange (not illustrated). The second positioning flange extends around the mounting hole 102 and is rotatably lined on an inner side of the positioning protrusion 111, and therefore the assembly stability can be improved. Thus, the rotation block 12 can be prevented from shaking in the circumferential direction of the rotation block 12, which facilitates the improvement of the operation effect.

Referring to FIG. 4 and FIG. 5, in some embodiments of the present invention, the rotation block 12 has a plurality of limit grooves 106 formed at an outer peripheral surface of the rotation block 12. The plurality of limit grooves 106 is arranged at intervals in a circumferential direction of the rotation block 12. The positioning structure 13 includes a ball 131 and a first elastic member 132. The ball 131 may be removably embedded into the limit groove 106 in a radial direction of the rotation block 12 to position the rotation block 12. The first elastic member 132 is connected to the ball 131, and the elastic member is configured to exert a force to push the ball 131 in the radial direction of the rotation block 12 to allow the ball 131 to be embedded into the limit groove 106. That is, the rotation block 12 is positioned by the positioning structure 13 in the circumferential direction of the rotation block 12. During adjustment, a rotational force of the rotation block 12 overcomes an elastic force of the first elastic member 132 to drive the ball 131 to be disengaged from the limit groove 106. When the rotation block 12 rotates in the circumferential direction of the rotation block 12, the ball 131 may be embedded into other limit grooves 106 again, the first elastic member 132 may push the ball 131 into the limit groove 106, and the ball 131 maintains a stable state in the limit groove 106. In this way, stability of the adjustment is improved. Therefore, when the valve stem 4 adjusts a rotation angle of the valve core 3, a rotation member in the gear switch 1 cooperates with the positioning structure 13 to form a plurality of adjustment positions. When the user adjusts, when the ball 131 is disengaged from a limit groove 106 and embedded into another limit groove 106, there exists a resistance that forms a damping feel in hand, which facilitates the user to determine the adjustment effect and quickly and accurately position the valve stem 4 at a target position. Therefore, the stability of the adjustment is easily maintained.

When the gear switch 1 is applied to the plug valve 100 of a gas stove, there exists an obvious tactile limit during the adjustment. Positions of the plurality of limit grooves 106 may correspond to rotational positions of the valve core 3, and therefore there exist different flow rate outputs. In this way, the purpose of quickly and accurately finding a required position of flame intensity can be achieved.

That is, in the base 11, a limit structure at the gear switch 1 is formed by the rotation block 12, the ball 131, and the first elastic member 132, which facilitates improvement of accuracy of user adjustment to provide convenience for user operation.

Referring to FIG. 3, in some embodiments of the present invention, the receiving hole 101 has a recession cavity 107 formed at the inner peripheral surface of the receiving hole 101. The ball 131 is embedded into the recession cavity 107 and at least partially protrudes from the inner peripheral surface of the base 11 to be embedded into the limit groove 106, and the elastic member is embedded into the recession cavity 107 and supported between the ball 131 and the base 11.

In some embodiments of the present disclosure, the mounting hole 102 is constructed into a non-circular hole shape and adapted to cooperate with the valve stem 4, and therefore the valve stem 4 can drive the rotation block 12 to rotate synchronously. In some embodiments, the valve stem 4 is at least partially constructed as a non-circular stem portion, and the non-circular stem portion is adapted to pass through the non-circular mounting hole 102 to improve the stability of the valve stem 4 driving the rotation block 12. The mounting hole 102 and the stem portion may form into a "D" shape.

Referring to FIG. 5, further, the gear switch 1 further includes an ignition switch 14. The ignition switch is fixedly connected to the base 11, and therefore a distance between the ignition switch 14 and the valve stem 4 can be reduced. In this way, the spatial arrangement is facilitated. During the assembly, a number of parts can be reduced, and the assembly difficulty is thus reduced. The housing of the ignition switch 14 and the base 11 are integrally formed, which facilitates manufacturing and the assembly. Therefore, the assembly difficulty is reduced and assembly efficiency is improved. In addition, saving of assembly space is facilitated.

In some embodiments of the present invention, the ignition switch 14 is arranged side by side with the base 11, and therefore the structural compactness can be improved. In addition, when the gear switch 1 is applied in the plug valve 100, the spatial arrangement is facilitated.

Referring to FIG. 3, in some embodiments of the present embodiments, a recession hole 108 is formed between the ignition switch 14 and the base 11. An actuation portion of the ignition switch 14 is located on a side of the ignition switch 14 close to the recession hole 108. The gear switch 1 further includes a transmission rod 16 passing through the recession hole 108 and having an end configured to be connected to the valve stem 4 and another end facing towards the actuation portion and configured to trigger the ignition switch 14 when the valve stem 4 is pressed. That is, the transmission rod 16 is connected between the valve stem 4 and the actuation portion of the ignition switch 14, and the transmission rod 16 can transmit power from the valve stem 4 to the actuation portion to trigger the ignition switch 14 by pressing the valve stem 4. The recession hole 108 can be configured for mounting of the transmission rod 16, and the recession hole 108 is formed on a side close to the actuation portion, which facilitates shortening a distance between the transmission rod 16 and the actuation portion. Therefore, the improvement of the compactness of the structure is facilitated. In some embodiments, an end of the transmission rod 16 is further provided with a support portion. The support portion is constructed as a U-shaped structure with an opening in a side. The open end faces towards the valve stem 4 to be adapted to support or snap and hold the valve stem 4, and therefore a transmission effect and stability of operation are improved.

Referring to FIG. 1 and FIG. 7, a plug valve 100 according to the embodiments of the present invention includes a valve body 2, a valve core 3, a valve stem 4, and the gear switch 1 for the plug valve described above. The valve body 2 has an inlet 203 and an outlet 204. The valve core 3 is disposed in the valve body 2 and is configured to adjust an opening degree between the inlet 203 and the outlet 204 through rotating. The valve stem 4 is connected to the valve core 3 and is configured to drive the valve core 3. The valve stem 4 is connected to the rotation block 12. In the plug valve 100 according to the embodiments of the present disclosure, by applying the gear switch 1 in the plug valve 100, the adjustment effect can be improved. Moreover, the structural compactness of the plug valve 100 can be improved, and the spatial arrangement is thus facilitated.

Referring to FIG. 7, in some embodiments of the present invention, the valve body 2 has a receiving cavity 20. The valve core 3 is disposed in the receiving cavity 20. The plug valve 100 further includes a valve seat 5 covering the receiving cavity 20 and positioning the valve core 3. The valve stem 4 has an end extending into the valve seat 5 to be connected to the valve core 3 and another end extending out of the valve seat 5. The base 11 is stacked at an outer side of the valve seat 5, which facilitates the spatial arrangement and improves the structural compactness.

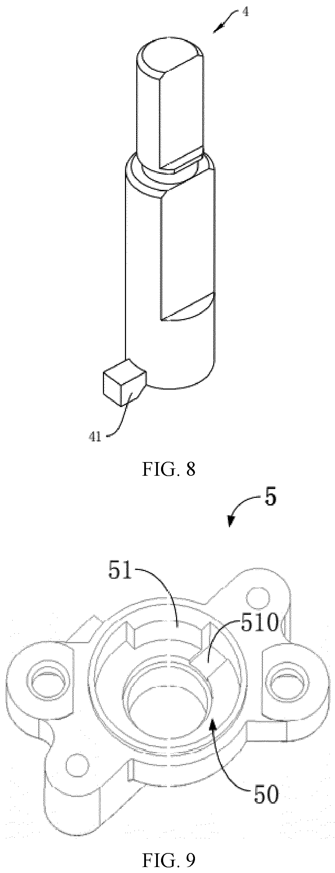

Referring to FIG. 9, in some embodiments of the present invention, an inner side surface of the valve seat 5 has a second positioning groove 50. The second positioning groove 50 extends in a circumferential direction of the valve seat 5, and two ends of the second positioning groove 50 are separated by a second stop block 51. An end of the valve stem 4 extending into the inner side of the valve seat 5 is provided with a second positioning portion 41. The second positioning portion 41 is embedded into the second positioning groove 50, and the second positioning portion 41 is movable along the second positioning groove 50 and is adapted to be stopped by the second stop block 51. The valve stem 4 is movably connected to the valve core 3 in an axial direction of the valve stem 4. The valve stem 4 and the valve core 3 are positioned in the axial direction. The valve body 2 is provided with a second elastic member. The second elastic member is configured to exert a force to push the valve stem 4 to extend out of the valve seat 5. A child lock groove 501 is formed at an inner top surface of the second positioning groove 50. When the inlet 203 and the outlet 204 are partitioned by the valve core 3, the second positioning portion 41 is embedded into the child lock groove 501 to limit the second positioning portion 41 to rotate. Therefore, accidental touch is avoided. An upper edge at a side of the child lock groove 501 is connected to a lower edge of the second stop block 51, and therefore the second stop block 51 can limit the second positioning portion 41 to rotate, and the second positioning portion 41 can only rotate in a predetermined direction to be disengaged from the child lock groove 501. In this way, safety in use is improved and the accidental touch is avoided.

In some embodiments, the second positioning groove 50 may define an adjustment range in the valve seat 5, and the second stop block 51 can form a limit position at an end portion of the second positioning groove 50. For example, a maximum value and a minimum value for the adjustment are defined. During the adjustment, the second positioning portion 41 protruding from a bottom of the valve stem 4 is embedded into the child lock groove 501 to form a child lock, and by pressing the valve stem 4 and rotating the stem 4 in a predetermined direction, the second positioning portion 41 is disengaged from the child lock groove 501 to achieve unlocking. Therefore, the second positioning portion 41 can move in the second positioning groove 50 until the second positioning portion 41 is stopped by the second stop block 51. That is, when it is necessary to adjust the opening degree between the inlet 203 and the outlet 204 to a maximum or minimum, the valve stem 4 can be rotated directly to the limit position, and the second stop block 51 can provide feedback on the limiting for the user for ease of use.

A plug valve 100 and a gear switch 1 of a specific embodiment of the present invention are described below with reference to the accompanying drawings.

As illustrated in FIG. 1, a plug valve 100 according to some embodiments of the present invention includes: a valve body 2, a valve core 3, a valve seat 5, a valve stem 4, a shifter lever 6, a seal gasket 9, a bottom cover 7, a solenoid valve 8, a lock nut, a valve needle 31, a valve needle spring, a flat gasket, a valve needle seal ring, a trimmer screw 10, a screw seal ring, and a gear switch 1. The gear switch 1 includes a gear limit structure and an ignition switch 14 that triggers an ignition signal upon an action of pressing the valve stem 4.

Referring to FIG. 9, a second stop block 51 of the valve seat 5 can prevent the valve stem 4 from rotating in a reverse direction. When the plug valve 100 is at an initial position, the second positioning portion 41 at a bottom of the valve stem 4 is snapped into a child lock groove 501 of the valve seat 5 to form a child lock. The valve stem 4 must be pressed before the valve stem 4 can be rotated in a specified direction. The second positioning portion 41 is aligned with a snap groove 104 of the valve core 3. After pressing the valve stem 4 to unlock the child lock, the valve core 3 can be driven to rotate by rotating the second positioning portion 41 at the bottom of the valve stem 4. A rotation block 12 of the gear switch 1 can rotate synchronously with the valve stem 4. The gear switch 1 is fixed at the valve seat 5 and may be fixed through a bolt or a buckle.

Further, referring to FIG. 3 and FIG. 6, a plurality of limit grooves 106 at an outer peripheral surface of the rotation block 12 forms an uneven engagement surface on the outer peripheral surface of the rotation block 12. During rotation of the rotation block 12 along with the valve stem 4, a ball 131 is in contact with the engagement surface and a first elastic member 132. The ball 131 moves along the engagement surface under an elastic force of the first elastic member 132. There is a difference in a rotation torque of the rotation block 12, forming a damping feel during the rotation of the valve stem 4. A height difference of the engagement surface forms a structural shape like a peak and a valley. The ball 131, when positioned in a valley between two peaks, is a limit position, and the gear switch 1 is arranged with a plurality of limit positions. For example, in this embodiment, an initial 0° position is a limit position, and a plurality of limit positions is arranged between a maximum flame intensity position and a minimum flame intensity position, and the cover plate 15 may limit the rotation block 12, the first elastic member 132, and the ball 131 within a base 11.

In some embodiments, the engagement surface may also be arranged on the base 11, the ball 131 may be replaced with a structure that is engaged with the engagement surface in a sliding or rolling manner. The first elastic member 132 may be a spring, or may be replaced with an elastic element that generates an elastic force change based on deformation, and the elastic element may be arranged on the rotation block 12 to form a gear limit structure with a consistent action and principle.

Further, the valve seat 5 has a second positioning groove 50 provided with a second stop block 51, and the valve stem 4 is provided with a second positioning portion 41. During rotation of the valve stem 4, the second positioning portion 41 of the valve stem 4 rotates to the second stop block 51 of the valve seat 5, which is a limit rotation position and a minimum flow rate output position. Alternatively, the rotation block 12 has a first positioning groove 105, the first positioning groove 105 is provided with a first stop block 121, and a first positioning portion 151 on the cover plate 15 limits the limit rotation position of the rotation block 12. Only one of the stop limit position on the valve seat 5 and the stop position on the gear switch 1 may be provided.

Further, the valve body 2 includes an inlet 203, an outlet 204, a solenoid valve accommodation cavity, a receiving cavity, a first gas outlet channel 201, a second gas outlet channel 202, and a flow rate adjustment cavity. Gas enters the solenoid valve accommodation cavity from the inlet 203. The solenoid valve 8 is in contact and sealed with the solenoid valve accommodation cavity in an initial state. A shifter lever 6 is pushed to rotate by a valve needle 31 while pressing the valve stem 4, and the shifter lever 6 is actuated to open the solenoid valve 8. The gas enters a cavity formed by the bottom cover 7 and the valve body 2, and the bottom cover 7 and the valve body 2 are sealed by the seal gasket 9.

The valve core 3 is placed in a receiving cavity 20 of the valve body 2, and a taper with oil-lubricated seal is formed between the valve body 2 and the valve core 3. The gas enters a gas inlet cavity of the valve core 3 from a cavity of the bottom cover 7, and the gas is outputted from the outlet 204 after the valve core 3 is in communication with the gas outlet channel of the valve body 2. The trimmer screw 10 is mounted in the flow rate adjustment cavity on the valve body 2, and a maximum flow rate outputted by the second gas outlet channel 202 can be controlled by adjusting screw insertion depth.

During application, a gas outlet hole of the valve core 3 is first in communication with the first gas outlet channel 201 of the valve body 2 during the rotation of the valve core 3. When the valve core 3 rotates 90°, a throttle area of the gas channel reaches its maximum, and therefore a flow rate is at its maximum. During adjustment from 90° to a position (270°) of a minimum flow rate, a gas passage formed by the gas outlet hole of the valve core 3 and the first gas outlet channel 201 of the valve body 2 is gradually replaced by a gas passage formed by an adjustment groove and the first gas outlet channel 201 of the valve body 2, the throttle area is reduced, and therefore the flow rate is reduced. The adjustment groove is composed of a groove in communication with the gas inlet cavity of the valve core 3 and two blind grooves in communication with each other with different heights and depths. During the adjustment, the adjustment groove is only partially in communication with the first gas outlet channel 201 of the valve body 2, and the gas outlet hole of the valve core 3 is in no communication with the second gas outlet channel 202 of the valve body 2. In the process of reducing the throttle area of the gas passage formed by the gas outlet hole of the valve core 3 and the first gas outlet channel 201 of the valve body 2, the adjustment groove is gradually in communication with the second gas outlet channel 202 of the valve body 2, to improve flow rate control performance.

In this embodiment, the gear switch 1 is provided with a limit position at a position of 0°, and 9 limit positions uniformly arranged between the maximum flame intensity position 90° and the minimum flame intensity position 270°. Each limit position corresponds to a different position of the rotational angle of the valve stem 4. The valve core 3 is driven by the valve stem 4 to rotate at different angles, and the rotational position of the valve core 3 cooperating with the valve stem 4 is also different. Therefore, a flame intensity output is different. Thus, a flow rate output is accurately adjusted.

Referring to FIG. 1 to FIG. 19, the plug valve 100 according to the embodiments of the present invention includes the valve body 2, the valve core 3, and the valve seat 5. The valve body 2 has the inlet 203 and the outlet 204 for ventilation. The valve core 3 is disposed in the valve body 2 and is configured to adjust the opening degree between the inlet 203 and the outlet 204 through rotating, to adjust ventilation volume between the inlet 203 and the outlet 204. The valve seat 5 covers the valve body 2. The valve core 3 is disposed between the valve body 2 and the valve seat 5. The valve seat 5 may be configured to support the valve core 3 and be form as a seal pair.

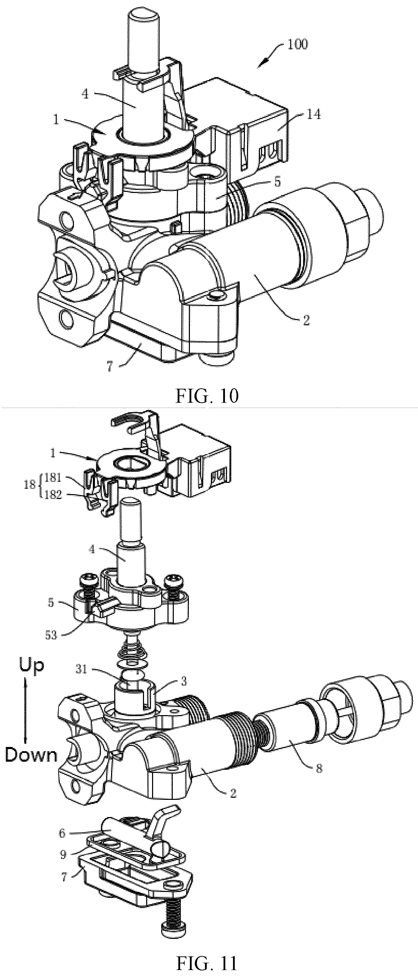

Further, referring to FIG. 10 and FIG. 11, the plug valve 100 further includes the gear switch 1 and the valve stem 4. The gear switch 1 includes the base 11, the rotation block 12, and the positioning structure 13. The base 11 and the valve seat 5 are of a split structure. the base 11 is stacked at a side of the valve seat 5 facing away from the valve body 2 and snapped to the valve seat 5. The rotation block 12 is rotatably embedded into the base 11. The positioning structure 13 is disposed at the base 11 and is configured to position the rotation block 12. The valve stem 4 is inserted into the valve seat 5 in the axial direction and connected to the valve core 3 to drive the valve core 3, and the valve stem 4 is in transmission connection with the rotation block 12. In some embodiment, the rotation block 12 and the positioning structure 13 form a limit structure in the gear switch 1, and therefore the stability and accuracy of the valve stem 4 can be improved during the adjustment of the valve stem 4. Moreover, the stable state of the positioning valve stem 4 after the adjustment can be improved, and therefore adjustment accuracy is improved. In addition, each of the rotation block 12 and the positioning structure 13 is disposed at the base 11, facilitating the improvement of the structural compactness of the gear switch 1 and assembly. In some embodiments, the valve seat 5 is detachably connected to the base 11 in a stacked manner and through the buckle, facilitating the spatial arrangement. Moreover, the assembly structure is simple, facilitating improvement of the assembly efficiency. Thus, reduction in the manufacturing cost is facilitated. During the application, the valve seat 5 may be detached from the base 11 by separating the buckle, which facilitates improvement of flexibility of use. In addition, there is no need of tools during the assembly and the disassembly, facilitating the assembly and the use.

In the plug valve 100 according to the embodiments of the present invention, the valve seat 5 is stacked at the base 11 and connected to the base 11 through the buckle, and therefore the structural compactness can be improved. Thus, the assembly structure can be simplified.

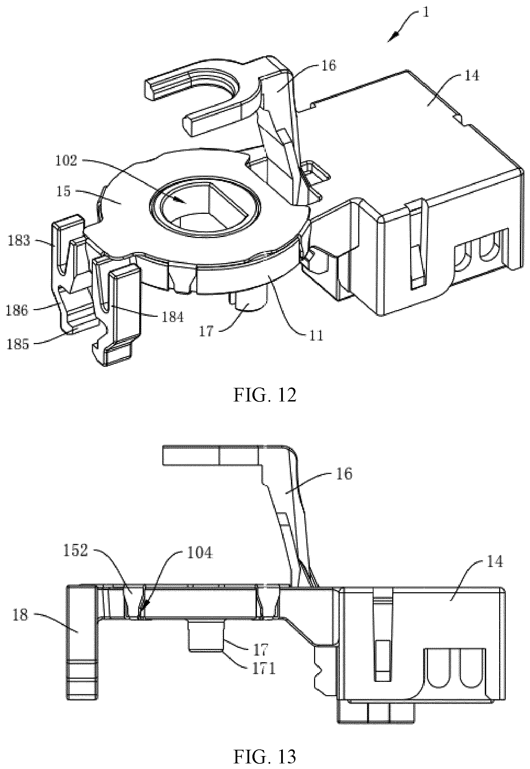

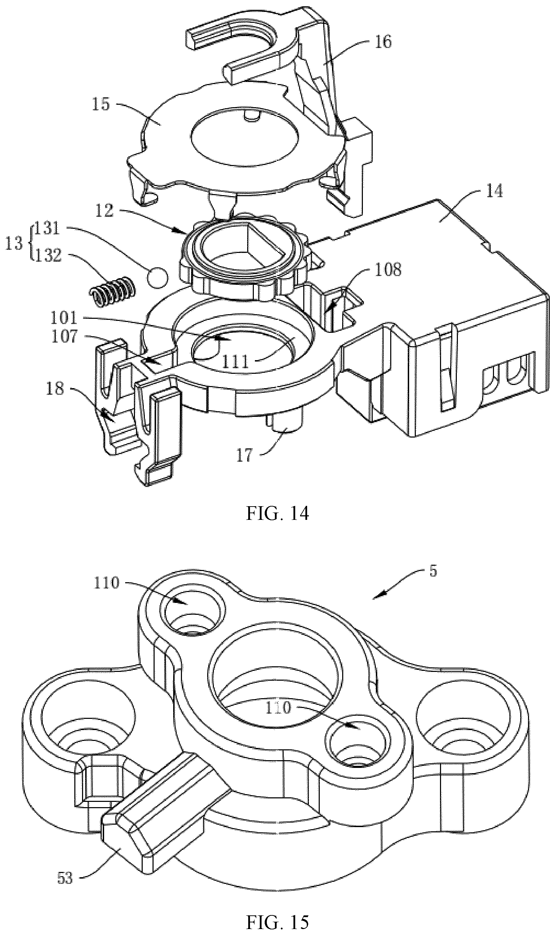

Referring to FIG. 12 and FIG. 15, in some embodiments of the present invention, one of the valve seat 5 and the base 11 is provided with a positioning post 17, and another of the valve seat 5 and the base 11 has a positioning hole 110. The positioning post 17 extends axially and is embedded into the positioning hole 110 in the axial direction. The positioning post 17 is fit with the positioning hole 110 to position the base 11 and the valve seat 5. That is, the valve seat 5 and the base 11 can be positioned through an axial fitting and a hole fitting, with a simple structure and high stability.

In some embodiments of the present invention, the positioning post 17 is in interference fit with the positioning hole 110, which facilitates the improvement of the stability after the assembly and thus preventing the positioning post 17 from shaking in the positioning hole 110.

Referring to FIG. 13, in some embodiments of the present invention, a free end of the positioning post 17 is configured as a wedged surface 171 tapering inwards from an outer peripheral surface of the positioning post 17 away from a fixing end of the positioning post 17, and a radial dimension of the free end of the positioning post 17 is smaller than a radial dimension of the positioning hole 110. Therefore, during the assembly, the free end of the at last one positioning post 17 can be more easily inserted into the positioning hole 110. In this way, quick position and the improvement of the assembly efficiency are facilitated. When the free end of the positioning post 17 is in contact with the positioning hole 110, the wedged surface 171 of the positioning post 17 facilitates the positioning post 17 to slide into the positioning hole 110. In some embodiments, an end portion of the free end of the positioning post 17 may also be configured to be other shapes with an outer peripheral surface thereof tapering inwards.

In some embodiments of the present invention, a closed end of the positioning hole 110 may also be configured to cooperate with the wedged surface 171, to improve assembly stability of the positioning post 17.

Referring to FIG. 14 and FIG. 15, in some embodiments of the present disclosure, a plurality of positioning posts 17 is provided, and a plurality of positioning posts 17 is provided and correspond to the plurality of positioning posts 17. The plurality of positioning posts 17 is embedded into a corresponding one of the plurality of positioning holes 110, and therefore stability of a connection can be improved. For example, the plurality of positioning holes 110 or the plurality of positioning posts 17 may be arranged at intervals at a periphery of the valve seat 5.

In the plug valve 100 according to the embodiments of the present invention, the positioning hole 110 is disposed at the valve seat 5, and the positioning post 17 is disposed at the base 11.

Referring to FIG. 11 and FIG. 12, in some embodiments of the present invention, the base 11 is provided with a jaw 18 at a side of the base 11, the valve seat 5 is provided with a limit protrusion 53. The jaw 18 has an opening facing towards the limit protrusion 53 in the axial direction, and the jaw 18 is configured to be snapped with the limit protrusion 53 in the axial direction. Therefore, a snap-in connection between the base 11 and the valve seat 5 is realized. In addition, the structure is simple and easy to form.

Referring to FIG. 12, in some embodiments of the present invention, the jaw 18 includes a first hook portion 181 and a second hook portion 182. An end of the first hook portion 181 is connected to an end of the second hook portion 182 and the base 11. Another end of the first hook portion 181 and another end of the second hook portion 182 extend towards the limit protrusion 53 in the axial direction and are spaced apart from each other. The first hook portion 181 and the second hook portion 182 are configured to be snapped with two opposite sides of the limit protrusion 53, respectively. That is, the first hook portion 181 and the second hook portion 182 may configure the jaw 18 to be of a structure with a closed end and another open end. Therefore, the limit protrusion 53 may be positioned between the first hook portion 181, the second hook portion 182, and the base 11 by the jaw 18 from a plurality of directions. Thus, the structural stability is enhanced.

Further, referring to FIG. 12, in some embodiments of the present invention, the first hook portion 181 is provided with a first handle portion 183. The first handle portion 183 is connected to a middle part of the first hook portion 181 in the axial direction. The first handle portion 183 extends in in an axial direction facing away from the valve seat 5 and is spaced apart from the first hook portion 181. A power arm may be formed at the first hook portion 181 and is easy for an operator to handle. The first handle portion 183 is disposed at a side of the first hook portion 181 facing away from the second hook portion 182, and when a position of the first handle portion 183 is changed, the first hook part 181 may be driven to move to be snapped with or disengaged from the limit protrusion 53. In some embodiments, the first handle portion 183 is disposed at an upper side of the middle part of the first hook portion 181 in the axial direction, and a lower side of the first hook portion 181 is provided with a buckle 185 configured for snapping and gripping of the limit protrusion 53. Therefore, when a force is exerted on the first handle portion 183 towards a direction close to the second hook portion 182, the buckle 185 moves towards a direction facing away from the second hook portion 182 and is disengaged from the limit protrusion 53.

In some embodiments of the present disclosure, the second hook portion 182 may also be provided with a second handle portion 184. The second handle portion 184 is connected to the middle part of the second hook portion 182 in the axial direction. The second handle portion 184 extends in the axial direction facing away from the valve seat 5 and is spaced apart from the second hook portion 182. The second handle portion 184 is disposed at a side of the second hook portion 182 facing away from the first hook portion 181. A principle of the second handle portion 184 is the same as the principle of the first handle portion 183. and details thereof are not repeated herein. That is, the handle portion may be disposed at each of the first hook portion 181 and the second hook portion 182, to facilitate separation of the valve seat 5 and the base 11. Therefore, operation is simplified.

Referring to FIG. 12, in the plug valve 100 according to the embodiments of the present invention, the jaw 18 includes the first hook portion 181 and the second hook portion 182, and the first hook portion 181 faces towards the second hook portion 182. Each of the first hook portion 181 and the second hook portion 182 includes the handle portion, a limit portion 186, and a buckle 185. The handle portion is connected to the limit portion 186 and extends upwards in the axial direction. The limit portion 186 extends downwards in the axial direction and contracts in a direction close to the limit protrusion 53 when extending downwards, or the limit portion 186 may also be configured to be engaged with and snapped with the limit protrusion 53. The buckle 185 is connected to a free end of the limit portion 186 and faces towards the limit protrusion 53 in the axial direction, to improve a snapping effect on the limit protrusion 53. An upper position of the limit protrusion 53 or a position of the limit protrusion 53 engaged with the limit portion 186 may be configured to be a wedged structure, to improve stability of snapping the limit protrusion 53 with the first hook portion 181 and the second hook portion 182.

Referring to FIG. 14 and FIG. 15, during actual use, the plurality of positioning holes 110 is correspondingly connected to the plurality of positioning posts 17. By exerting a force to the first handle portion 183 and the second handle portion 184, the limit portion 186 may be appropriately opened, and the limit protrusion 53 may be snapped between the first hook portion 181 and the second hook portion 182 to realize the connection between the valve seat 5 and the base 11. When the valve seat 5 needs to be separated from the base 11, a force is exerted on the first handle portion 183 and the second handle portion 184 to open the limit portion 186, and the jaw 18 is moved upwards in the axial direction to enable the jaw 18 to leave the limit protrusion 53.

Referring to FIG. 14, in some embodiments of the present disclosure, the gear switch 1 further includes an ignition switch 14. The ignition switch 14 is fixedly connected to the base 11, and therefore a distance between the ignition switch 14 and the valve stem 4 can be reduced. As a result, during the assembly, the number of parts can be reduced, and the assembly difficulty is thus reduced. The jaw 18 and the ignition switch 14 are disposed at two opposite sides of the base 11, respectively, which facilitates improvement of a balance of the base 11 and the spatial arrangement.

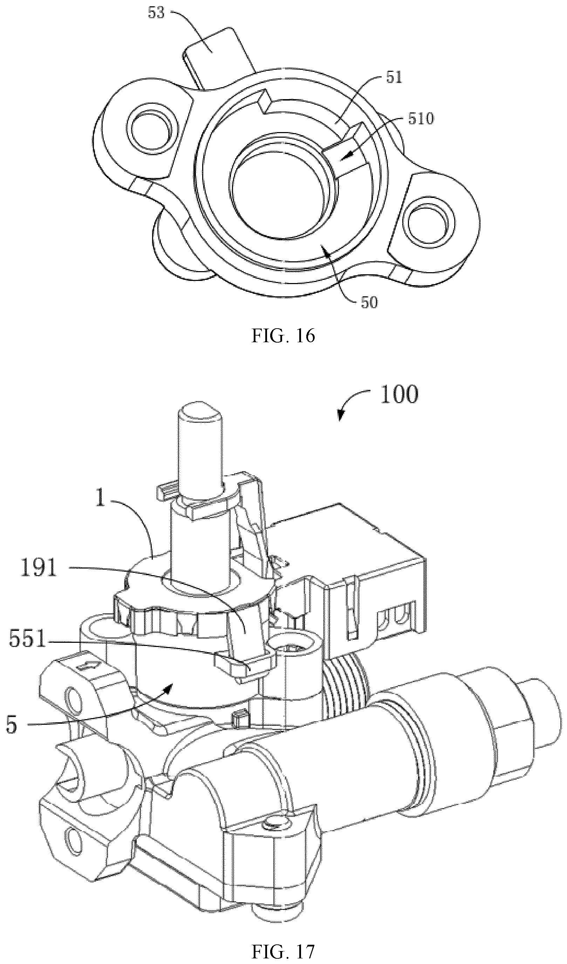

Referring to FIG. 17 to FIG. 19, in some other embodiments of the present invention, the two opposite sides of the base 11 are provided with a first buckle 191 and a second buckle 192, respectively. Each of the first buckle 191 and the second buckle 192 has an end connected to the base 11 and another end extending towards the valve seat 5 in the axial direction. The valve seat 5 is provided with a first lug 551 and a second lug 552. The first lug 551 faces towards the first buckle 191 in the axial direction, and the second lug 552 faces towards the second buckle 192 in the axial direction. The first buckle 191 is configured to be snapped into the first lug 551 in the axial direction, and the second buckle 192 is configured to be snapped into the second lug 552 in the axial direction. That is, the base 11 and the valve seat 5 may also be snapped into each other in the axial direction and an up-down direction at the two opposite sides of the base 11. In some embodiments, the lug is configured to be snapped with the buckle, and therefore the connection stability can be improved. Thus, the buckle is prevented from being separated from the lug. In combination with the above, the valve seat 5 may be axially connected to the base 11 by the positioning hole 110 and the positioning post 17, and the valve seat 5 and the base 11 can be limited in the circumferential direction when the valve seat 5 is connected to the base 11 through an engagement between the lug and the buckle. In this way, stability of the fixed connection between the valve seat 5 and the base 11 is improved.

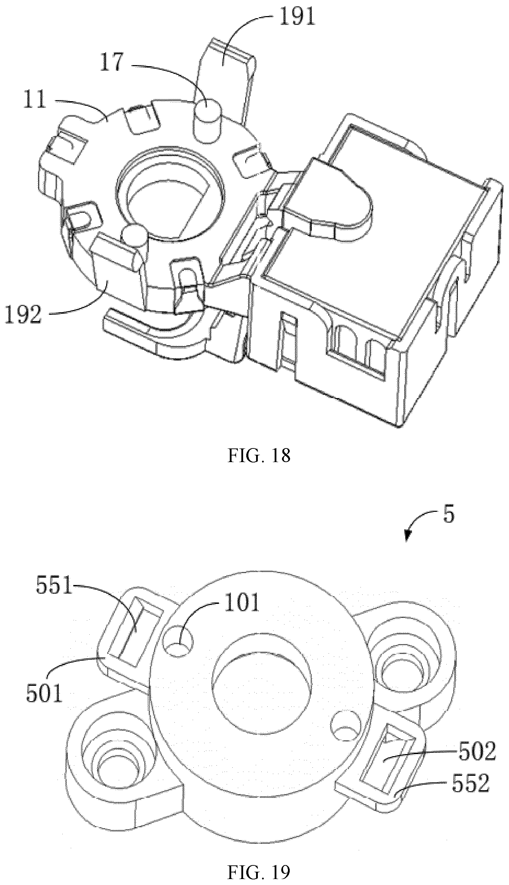

Further, referring to FIG. 18, in some embodiments of the present invention, in an axial direction facing away from the base 11, the first buckle 191 and the second buckle 192 are inclined in a direction facing away from each other, and therefore a recession space can be provided at a mounting position of the lug and the valve seat 5. In this way, the space arrangement is facilitated. In addition, the connection stability can be improved. Thus, the buckle is prevented from being disengaged from the lug.

Referring to FIG. 19, in some embodiments of the present invention, the first lug 551 has a first positioning hole 501 constructed as an inclined hole inclined relative to the axial direction, and an inclination direction of the first positioning hole 501 is the same as an inclination direction of the first buckle 191. Therefore, the first buckle 191 is easily inserted into the first positioning hole 501 in the axial direction. Moreover, when the valve seat 5 is subjected to an upward force in the axial direction, the first buckle 191 is limited by the inclined hole. In this way, the second buckle 192 is prevented from being disengaged from the first positioning hole 501. As a result, the assembly stability is improved.

In some embodiments of the present invention, the second lug 552 has a second positioning hole 502 constructed as an inclined hole inclined relative to the axial direction, and an inclination direction of the second positioning hole 502 is the same as an inclination direction of the second buckle 192. Therefore, the second buckle 192 is easily fitted on the second lug 552 and is prevented from being disengaged.

In some embodiments, each of the first buckle 191 and the second buckle 192 includes a body portion and a hook portion. The body portion extends obliquely. A fixing end of the body portion is connected to the base 11, and the hook portion is disposed at a free end of the body portion. The hook portion extends in the inclined direction and is adapted to be snapped into the positioning hole of the lug to improve the assembly stability.

During application, when the valve seat 5 needs to be mounted on the base 11, the positioning post 17 faces towards the positioning hole 110, the first buckle 191 faces towards the first positioning hole 501 of the first lug 551 in the axial direction, and the second buckle 192 faces towards the second positioning hole 502 of the second lug 552. Therefore, the first buckle 191 and the second buckle 192 are adapted to pass through the first positioning hole 501 and the second positioning hole 502 to be snapped into the first lug 551 and the second lug 552. When the valve seat 5 needs to be disassembled, the first buckle 191 and the second buckle 192 are pressed in the direction close to the base 11, and the first buckle 191 and the second buckle 192 are moved upwards in the axial direction. Therefore, the buckle is disengaged from the lug.

Referring to FIG. 12 and FIG. 14, in the gear switch 1 according to the embodiments of the present invention, the receiving hole 101 is formed at the base 11, the rotation block 12 is rotatably disposed in the receiving hole 101, and the mounting hole 102 is formed at the rotation block 12 and is configured to cooperate with the valve stem 4 to allow the rotation block 12 to rotate along with the valve stem 4. That is, the rotation block 12 may be mounted in the base 11, and the mounting hole 102 is formed at the rotation bock 12. The valve stem 4 cooperates with the mounting hole 102, and therefore the valve stem 4 can be connected to the rotation block 12. When the user rotates the valve stem 4, the rotation block 12 can rotate in the base 11. The positioning structure 13 is disposed at the base 11 and is configured to position the rotation block 12, and therefore the stability of the rotation block 12 during rotation can be improved. Thus, the adjustment accuracy can be improved. After the rotation block 12 rotates, the positioning structure 13 can also keep the rotation block 12 in a stable state, facilitating improvement of the adjustment effect. In some embodiments, the user rotates the valve stem 4 to drive the valve core 3 to rotate, and when the valve core 3 rotates to different positions or angles, the opening degree between the inlet 203 and the outlet 204 can be changed to realize flame intensity adjustment.

Referring to FIG. 6 and FIG. 12, the gear switch 1 further includes the cover plate 15. The cover plate 15 covers the end of the base 11, and the engagement hole 103 is formed at the cover plate 15. The peripheral rim of the engagement hole 103 covers the part of the receiving hole 101, and the engagement hole 103 faces towards the mounting hole 102. Therefore, the cover plate 15 can cover the part of the rotation block 12. Thus, the rotation block 12 and the positioning structure 13 can be limited in the base 11 to improve the structural stability after the base 11 is mounted. The positioning protrusion 111 is disposed at the other end of the base 11. The positioning protrusion 111 extends into the receiving hole 101 and is opposite to the cover plate 15 in the thickness direction of the base 11 to position the rotation block 12. Therefore, the limiting and positioning effects of the base 11 on the rotation block 12 can be improved.

Referring to FIG. 13, the plurality of positioning hooks 152 are disposed at the peripheral edge of the cover plate 15 and arranged at intervals in the circumferential direction of the cover plate 15, and the plurality of snap grooves 104 is formed at the outer peripheral surface of the base 11 and arranged at intervals in the circumferential direction of the base 11. The plurality of positioning hooks 152 corresponds to the plurality of snap grooves 104, respectively, and the plurality of positioning hooks 152 is embedded into a corresponding one of the plurality of snap grooves 104 and in snap-fit with the base 11. Therefore, the cover plate 15 can be prevented from shaking in the circumferential direction of the cover plate 15 to improve the structural stability. Moreover, flatness of the peripheral surface of the base 11 can also be improved.

Referring to FIG. 5 and FIG. 14, in some embodiments of the present invention, the first positioning groove 105 is formed at the rotation block 12. The first positioning groove 105 extends around the mounting hole 102, and the two ends of the first positioning groove 105 are separated by the first stop block 121. The cover plate 15 is provided with a positioning member. The positioning member is embedded into the first positioning groove 105, and the positioning member is movable along the first positioning groove 105 and adapted to be stopped by the first stop block 121 to form the limit position that limits the rotation of the rotation block 12 to restrict the rotation range of the rotation block 12. In some embodiments, after the cover plate 15 is assembled, the first positioning portion 151 is disposed opposite to the first positioning groove 105 and movably extends into the first positioning groove 105. When the rotation block 12 rotates in the receiving hole 101, the first stop block 121 rotates in the circumferential direction of the rotation block 12, and the first stop block 121 interferes with the first positioning portion 151 to limit the rotation block 12 to continue to rotate.

Referring to FIG. 2 and FIG. 5, in some embodiments of the present invention, the first positioning flange 123 is disposed at the rotation block 12. The first positioning flange 123 extends around the mounting hole 102 and is rotatably lined on the inner side of the engagement hole 103, and therefore the assembly stability can be improved. Especially when the rotation block 12 rotates, the first positioning flange 123 is sleeved on and connected to the inner side of the engagement hole 103, and therefore the rotation block 12 can be prevented from shaking in the circumferential direction of the rotation block 12, which facilitates the improvement of the operation effect.

In some embodiments of the present invention, the second positioning flange (not illustrated) is disposed at the rotation block 12. The second positioning flange extends around the mounting hole 102 and is rotatably lined on the inner side of the positioning protrusion 111, and therefore the assembly stability can be improved. Thus, the rotation block 12 can be prevented from shaking in the circumferential direction of the rotation block 12, which facilitates the improvement of the operation effect.

Referring to FIG. 5 and FIG. 14, in some embodiments of the present invention, the plurality of limit grooves 106 is formed at the outer peripheral surface of the rotation block 12 and arranged at intervals in the circumferential direction of the rotation block 12. The positioning structure 13 includes the ball 131 and the first elastic member 132. The ball 131 may be removably embedded into the limit groove 106 in the radial direction of the rotation block 12 to position the rotation block 12. The first elastic member 132 is connected to the ball 131, and the elastic member is configured to exert the force to push the ball 131 in the radial direction of the rotation block 12 to allow the ball 131 to be embedded into the limit groove 106. That is, the rotation block 12 is positioned by the positioning structure 13 in the circumferential direction of the rotation block 12. During the adjustment, the rotational force of the rotation block 12 overcomes the elastic force of the first elastic member 132 to drive the ball 131 to be disengaged from the limit groove 106. When the rotation block 12 rotates in the circumferential direction of the rotation block 12, the ball 131 may be embedded into other limit grooves 106 again, the first elastic member 132 may push the ball 131 into the limit groove 106, and the ball 131 maintains the stable state in the limit groove 106. In this way, the stability of the adjustment is improved. Therefore, when the valve stem 4 adjusts the rotation angle of the valve core 3, the rotation member in the gear switch 1 cooperates with the positioning structure 13 to form the plurality of adjustment positions. When the user adjusts, when the ball 131 is disengaged from the limit groove 106 and embedded into the other limit groove 106, there exists the resistance that forms the damping feel in hand, which facilitates the user to determine the adjustment effect and quickly and accurately position the valve stem 4 at the target position. Therefore, the stability of the adjustment is easily maintained.

When the gear switch 1 is applied to the plug valve 100 of a gas stove, there exists the obvious tactile limit during the adjustment. The positions of the plurality of limit grooves 106 may correspond to the rotational positions of the valve core 3, and therefore there exist different flow rate outputs. In this way, the purpose of quickly and accurately finding the required position of the flame intensity can be achieved.

That is, in the base 11, the rotation block 12, the ball 131, and the first elastic member 132 form the limit structure at the gear switch 1, which facilitates the improvement of the accuracy of the user adjustment to provide the convenience for the user operation.

Referring to FIG. 14, in some embodiments of the present invention, the recession cavity 107 is formed at the inner peripheral surface of the receiving hole 101. The ball 131 is embedded into the recession cavity 107 and at least partially protrudes from the inner peripheral surface of the base 11 to be embedded into the limit groove 106, and the elastic piece is embedded into the recession cavity 107 and supported between the ball 131 and the base 11.

Referring to FIG. 5 and FIG. 12, in some embodiments of the present invention, the mounting hole 102 is constructed into a non-circular hole shape and adapted to cooperate with the valve stem 4, and therefore the valve stem 4 can drive the rotation block 12 to rotate synchronously. In some embodiments, the valve stem 4 is at least partially constructed as the non-circular stem portion, and the non-circular stem portion is adapted to pass through the non-circular mounting hole 102 to improve the stability of the valve stem 4 driving the rotation block 12. The mounting hole 102 and the stem portion may form into the "D" shape.

Referring to FIG. 14, in some embodiments of the present invention, the housing of the ignition switch 14 and the base 11 are integrally formed, which facilitates the manufacturing and the assembly. Therefore, the assembly difficulty is reduced and the assembly efficiency is improved. In addition, the saving of assembly space is facilitated.

In some embodiments of the present invention, the ignition switch 14 is arranged side by side with the base 11, and therefore the structural compactness can be improved. In addition, when the gear switch 1 is applied in the plug valve 100, the spatial arrangement is facilitated.

Referring to FIG. 14, in some embodiments of the present invention, the recession hole 108 is formed between the ignition switch 14 and the base 11. The actuation portion of the ignition switch 14 is located on the side of the ignition switch 14 close to the recession hole 108. The gear switch 1 further includes the transmission rod 16. An end of the transmission rod 16 is configured to be connected to the valve stem 4, and another end of the transmission rod 16 faces towards the actuation portion and is configured to trigger the ignition switch 14 when the valve stem 4 is pressed. In some embodiments, the support portion is disposed at the end of the transmission rod 16. The support portion is constructed as the U-shaped structure with the opening in the side. The open end faces towards the valve stem 4 to be adapted to support or snap and hold the valve stem 4, and therefore the transmission effect and the stability of the operation are improved.

Referring to FIG. 16, in some embodiments of the present invention, the second positioning groove 50 is formed at the inner side surface of the valve seat 5. The second positioning groove 50 extends in the circumferential direction of the valve seat 5, and the two ends of the second positioning groove 50 are separated by the second stop block 51. The second positioning portion 41 is disposed at the end of the valve stem 4 extending into the inner side of the valve seat 5. The second positioning portion 41 is embedded into the second positioning groove 50, and the second positioning portion 41 is movable along the second positioning groove 50 and is adapted to be stopped by the second stop block 51. The valve stem 4 is movably connected to the valve core 3 in an axial direction of the valve stem 4. The valve stem 4 and the valve core 3 are positioned in the axial direction. The second elastic member is disposed in valve body 2. The second elastic member is configured to exert the force to push the valve stem 4 to extend out of the valve seat 5. The child lock groove 501 is formed at the inner top surface of the second positioning groove 50. When the inlet 203 and the outlet 204 are partitioned by the valve core 3, the second positioning portion 41 is embedded into the child lock groove 501 to limit the second positioning portion 41 to rotate. Therefore, the accidental touch is avoided. The upper edge at the side of the child lock groove 501 is connected to the lower edge of the second stop block 51, and therefore the second stop block 51 can limit the second positioning portion 41 to rotate, and the second positioning portion 41 can only rotate in the predetermined direction to be disengaged from the child lock groove 501. In this way, the safety in use is improved and the accidental touch is avoided.

Referring to FIG. 11, FIG. 14 and FIG. 15, in the plug valve 100 according to a specific embodiment of the present invention, the gear switch 1 is fixed by cooperating the jaw 18 and the positioning post 17 with the limit protrusion 53 on the valve seat 5 and the positioning hole 110. During the assembly, after the mounting hole 102 of the gear switch 1 cooperates with the valve stem 4, the positioning post 17 is aligned with the positioning hole 110, and the gear switch 1 is pressed to a position where the jaw 18 is snapped with the limit protrusion 53 to complete the assembly. When the gear switch 1 is detached, the handle portion of the jaw 18 of the gear switch 1 is pressed until the jaw 18 is separated from the limit protrusion 53 to pull out the gear switch 1.

Referring to FIG. 17 to FIG. 19, in the plug valve 100 according to another specific embodiment of the present invention, the gear switch 1 is fixed by cooperating the first buckle 191, the second buckle 192, and the positioning post 17 with the first lug 551 and the second lug 552 on the valve seat 5 and the positioning hole 110. During the assembly, after the mounting hole 102 of the gear switch 1 cooperates with the valve stem 4, the positioning post 17 is aligned with the positioning hole 110, and the gear switch 1 is pressed to a position where the first buckle 191 and the second buckle 192 are buckled by the first lug 551 and the second lug 552, respectively, to complete the assembly. When the gear switch 1 is detached, the first buckle 191 and the second buckle 192 of the gear switch 1 are pressed until the first buckle 191 and the second buckle 192 are separated from the first lug 551 and the second lug 552 to pull out the gear switch 1.

Referring to FIG. 1 and FIG. 19, a gas device according to the embodiments of the present invention includes the plug valve 100 described above. The plug valve 100 is applied in the gas device, and therefore the structural compactness can be improved. Moreover, the assembly is convenient, and therefore cost is reduced.

In some embodiments, the gas enters the solenoid valve 8 accommodation cavity from the inlet 203. The solenoid valve 8 is in contact and sealed with the solenoid valve 8 accommodation cavity in an initial state. The shifter lever 6 is pushed to rotate by the valve needle 31 while pressing the valve stem 4, and the shifter lever 6 is actuated to open the solenoid valve 8. The gas enters the cavity formed by the bottom cover 7 and the valve body 2, and the bottom cover 7 and the valve body 2 are sealed by the seal gasket 9.

In the description of the present invention, it is to be understood that, terms such as "thickness", "over", "below", "front", "back", "top", "bottom", "in", "out", "axial", "radial", and "circumference" refer to the directions and location relations which are the directions and location relations shown in the drawings, and for describing the present invention and for describing in simple, and which are not intended to indicate or imply that the device or the elements are disposed to locate at the specific directions or are structured and performed in the specific directions, which could not to be understood to the limitation of the present invention.

In addition, terms such as "first" and "second" are used herein for purposes of description and are not intended to indicate or imply relative importance or significance. Furthermore, the feature defined with "first" and "second" may comprise one or more this feature distinctly or implicitly. In the description of the present invention, "a plurality of" means two or more than two, unless specified otherwise.

In the description of the present disclosure, reference throughout this specification to "an embodiment," "some embodiments," "an example," "a specific example," or "some examples," means that a particular feature, structure, material, or characteristic described in connection with the embodiment or example is included in at least one embodiment or example of the present invention. Thus, the appearances of the phrases in various places throughout this specification are not necessarily referring to the same embodiment or example of the present invention. Furthermore, the particular features, structures, materials, or characteristics may be combined in any suitable manner in one or more embodiments or examples. Without a contradiction, the different embodiments or examples and the features of the different embodiments or examples can be combined by those skilled in the art.

## Claims

1. A gear switch (1) for a plug valve (100), the plug valve (100) comprising: a valve body (2) having an inlet (203) and an outlet (204); a valve core (3) disposed in the valve body (2) and configured to adjust an opening degree between the inlet (203) and the outlet (204) through rotating; and a valve stem (4) connected to the valve core (3) and configured to drive the valve core (3), the gear switch (1) comprising: a base (11) having a receiving hole (101); a rotation block (12) rotatably disposed in the receiving hole (101) and having a mounting hole (102) configured to cooperate with the valve stem (4) to allow the rotation block (12) to rotate along with the valve stem (4); and a positioning structure (13) disposed at the base (11) and configured to position the rotation block (12);
further comprising a cover plate (15) covering an end of the base (11) and having an engagement hole (103), a peripheral rim of the engagement hole (103) covering a part of the receiving hole (101), and the engagement hole (103) facing towards the mounting hole (102), wherein another end of the base (11) is provided with a positioning protrusion (111), the positioning protrusion (111) extending into the receiving hole (101) and being opposite to the cover plate (15) in a thickness direction of the base (11) to position the rotation block (12);
wherein the rotation block (12) has a first positioning groove (105) extending around the mounting hole (102),
**characterised in that** two ends of the first positioning groove (105) are separated by a first stop block (121); and the cover plate (15) is provided with a first positioning portion (151) embedded into the first positioning groove (105), the first positioning portion (151) being movable along the first positioning groove (105) and adapted to be stopped by the first stop block (121).

2. The gear switch (1) according to claim 1, wherein: the cover plate (15) is provided with a plurality of positioning hooks (152) at a peripheral edge of the cover plate (15), the plurality of positioning hooks (152) being arranged at intervals in a circumferential direction of the cover plate (15); and the base (11) has a plurality of snap grooves (104) formed at an outer peripheral surface of the base (11), the plurality of snap grooves (104) is arranged at intervals in a circumferential direction of the base (11), the plurality of positioning hooks (152) corresponding to the plurality of snap grooves (104), respectively, and each of the plurality of positioning hooks (152) being embedded into a corresponding one of the plurality of snap grooves (104) and in snap-fit with the base (11).

3. The gear switch (1) according to claim 1 or 2, wherein: the rotation block (12) is provided with a first positioning flange (123) extending around the mounting hole (102) and rotatably lined on an inner side of the engagement hole (103); and/or the rotation block (12) is provided with a second positioning flange extending around the mounting hole (102) and rotatably lined on an inner side of the positioning protrusion (111).

4. The gear switch (1) according to any one of claims 1 to 3, wherein: the rotation block (12) has a plurality of limit grooves (106) formed at an outer peripheral surface of the rotation block (12), the plurality of limit grooves (106) being arranged at intervals in a circumferential direction of the rotation block (12); and the positioning structure (13) comprises: a ball (131) removably embedded into one of the plurality of limit grooves (106) in a radial direction of the rotation block (12) to position the rotation block (12); and a first elastic member (132) connected to the ball (131), the elastic member being configured to exert a force to push the ball (131) in the radial direction of the rotation block (12) to allow the ball (131) to be embedded into the limit groove (106), optionally, wherein the receiving hole (101) has a recession cavity (107) formed at an inner circumferential surface of the receiving hole (101), the ball (131) being embedded into the recession cavity (107) and at least partially protruding from an inner peripheral surface of the base (11) to be embedded into the limit groove (106), and the elastic member being embedded into the recession cavity (107) and supported between the ball (131) and the base (11).

5. The gear switch (1) according to any one of claims 1 to 4, wherein the mounting hole (102) is constructed into a non-circular hole shape.

6. The gear switch (1) according to any one of claims 1 to 5, further comprising an ignition switch (14) fixedly connected to the base (11), optionally, wherein: a housing of the ignition switch (14) and the base (11) are integrally formed; and/or the ignition switch (14) is arranged side by side with the base (11); and/or a recession hole (108) is formed between the ignition switch (14) and the base (11), an actuation portion of the ignition switch (14) being located at a side of the ignition switch (14) close to the recession hole (108); and the gear switch (1) further comprises a transmission rod (16) passing through the recession hole (108), the transmission rod (16) having an end configured to be connected to the valve stem (4) and another end facing towards the actuation portion and configured to trigger the ignition switch (14) when the valve stem (4) is pressed.

7. A plug valve (100), comprising: a valve body (2) having an inlet (203) and an outlet (204); a valve core (3) disposed in the valve body (2) and configured to adjust an opening degree between the inlet (203) and the outlet (204) through rotating; a valve stem (4) connected to the valve core (3) and configured to drive the valve core (3); and the gear switch (1) according to any one of claims 1 to 6, the valve stem (4) being connected to the rotation block (12).

8. The plug valve (100) according to claim 7, wherein: the valve body (2) has a receiving cavity (20), the valve core (3) being disposed in the receiving cavity (20); and the plug valve (100) further comprises a valve seat (5) covering the receiving cavity (20) and positioning the valve core (3), the valve stem (4) having an end extending into the valve seat (5) to be connected to the valve core (3) and another end extending out of the valve seat (5), wherein the base (11) is stacked at an outer side of the valve seat (5), optionally, wherein: the valve seat (5) has a second positioning groove (50) formed at an inner side surface of the valve seat (5) and extending in a circumferential direction of the valve seat (5), two ends of the second positioning groove (50) being separated by a second stop block (51); an end of the valve stem (4) extending into the inner side of the valve seat (5) is provided with a second positioning portion (41) embedded into the second positioning groove (50), the second positioning portion (41) being movable along the second positioning groove (50) and adapted to be stopped by the second stop block (51); the valve stem (4) is movably connected to the valve core (3) in an axial direction of the valve stem (4), the valve stem (4) and the valve core (3) being positioned in the axial direction; the valve body (2) is internally provided with a second elastic member, the second elastic member being configured to exert a force to push the valve stem (4) to extend out of the valve seat (5); and the second positioning groove (50) has a child lock groove (510) formed at an inner top surface of the second positioning groove (50), the second positioning portion (41) being configured to be embedded into the child lock groove (510) when the inlet (203) and the outlet (204) are partitioned by the valve core (3).

9. The plug valve (100) according to claim 7, further comprising a valve seat (5) covering the valve body (2), the valve core (3) being disposed between the valve body (2) and the valve seat (5), wherein the gear switch (1) comprises the base (11), the rotation block (12), and the positioning structure (13), the base (11) and the valve seat (5) being of a split structure, the base (11) being stacked at a side of the valve seat (5) facing away from the valve body (2) and snapped to the valve seat (5), the rotation block (12) being rotatably embedded into the base (11), and the positioning structure (13) being disposed at the base (11) and configured to position the rotation block (12); and the valve stem (4) is inserted into the valve seat (5) in an axial direction of the valve stem (4) to be connected to the valve core (3) to drive the valve core (3), and is in transmission connection with the rotation block (12), optionally, wherein: one of the valve seat (5) and the base (11) is provided with a positioning post (17), and another one of the valve seat (5) and the base (11) has a positioning hole (110), the positioning post (17) extending axially and being embedded into the positioning hole (110) in the axial direction, and the positioning post (17) being in fit with the positioning hole (110) to position the base (11) and the valve seat (5), optionally, wherein: the positioning post (17) is in interference fit with the positioning hole (110); or a free end of the positioning post (17) is configured as a wedged surface (171) tapering from an outer peripheral surface of the positioning post (17) away from a fixing end of the positioning post (17), a radial dimension of the free end of the positioning post (17) being smaller than a radial dimension of the positioning hole (110); or a plurality of positioning posts (17) is provided, and a plurality of positioning holes (110) is provided and corresponding to the plurality of positioning posts (17), each of the plurality of positioning posts (17) being embedded into a corresponding one of the plurality of positioning holes (110).

10. The plug valve (100) according to claim 9, wherein: the base (11) is provided with a jaw (18) at a side of the base (11); and the valve seat (5) is provided with a limit protrusion (53), the jaw (18) having an opening facing towards the limit protrusion (53) in the axial direction, and the jaw (18) being configured to be snapped with the limit protrusion (53) in the axial direction, optionally, wherein the jaw (18) comprises a first hook portion (181) and a second hook portion (182), an end of the first hook portion (181) being connected to an end of the second hook portion (182) and the base (11), another end of the first hook portion (181) and another end of the second hook portion (182) extending towards the limit protrusion (53) in the axial direction and being spaced apart from each other, and the first hook portion (181) and the second hook portion (182) being configured to be snapped with two opposite sides of the limit protrusion (53), respectively, optionally, wherein: the first hook portion (181) is provided with a first handle portion (183) connected to a middle part of the first hook portion (181) in the axial direction, the first handle portion (183) extending away from the valve seat (5) and being spaced apart from the first hook portion (181), and the first handle portion (183) being disposed at a side of the first hook portion (181) facing away from the second hook portion (182); and/or the second hook portion (182) is provided with a second handle portion (184) connected to a middle part of the second hook portion (182) in the axial direction, the second handle portion (184) extending away from the valve seat (5) and being spaced apart from the second hook portion (182), and the second handle portion (184) being disposed at a side of the second hook portion (182) facing away from the first hook portion (181).

11. The plug valve (100) according to claim 10, wherein the gear switch (1) further comprises an ignition switch (14) fixedly connected to the base (11), the jaw (18) and the ignition switch (14) being disposed at two opposite sides of the base (11), respectively.

12. The plug valve (100) according to any one of claims 9 to 11, wherein: the base (11) is provided with a first buckle (191) and a second buckle (192) at the two opposite sides of the base (11) respectively, wherein each of the first buckle (191) and the second buckle (192) has an end connected to the base (11) and another end extending towards the valve seat (5) in the axial direction; and the valve seat (5) is provided with a first lug (551) and a second lug (552), the first lug (551) facing towards the first buckle (191) in the axial direction, the second lug (552) facing towards the second buckle (192) in the axial direction, the first buckle (191) being configured to be snapped into the first lug (551) in the axial direction, and the second buckle (192) being configured to be snapped into the second lug (552) in the axial direction, optionally, wherein in an axial direction facing away from the base (11), the first buckle (191) and the second buckle (192) are inclined away from each other, optionally, wherein: the first lug (551) has a first positioning hole (501), the first positioning hole (501) being constructed as an inclined hole inclined relative to the axial direction, and an inclination direction of the first positioning hole (501) being same as an inclination direction of the first buckle (191); and/or the second lug (552) has a second positioning hole (502), the second positioning hole (502) being constructed as an inclined hole inclined relative to the axial direction, an inclination direction of the second positioning hole (502) being same as an inclination direction of the second buckle (192).

13. A gas device, comprising the plug valve (100) according to any one of claims 7 to 12.

## Patentansprüche

1. Schalter (1) für einen Hahn (100), wobei der Hahn (100) Folgendes umfasst: einen Ventilkörper (2) mit einem Einlass (203) und einem Auslass (204), einen Ventileinsatz (3), der in dem Ventilkörper (2) angeordnet und so konfiguriert ist, dass er durch Drehen einen Öffnungsgrad zwischen dem Einlass (203) und dem Auslass (204) verstellt, und einen Ventilschaft (4), der mit dem Ventileinsatz (3) verbunden und so konfiguriert ist, dass er den Ventileinsatz (3) antreibt, wobei der Schalter (1) Folgendes umfasst: einen Sockel (11) mit einem Aufnahmeloch (101), einen Drehblock (12), der drehbar in dem Aufnahmeloch (101) angeordnet ist und ein Montageloch (102) aufweist, das so konfiguriert ist, dass es so mit dem Ventilschaft (4) zusammenwirkt, dass sich der Drehblock (12) zusammen mit dem Ventilschaft (4) drehen kann, und eine Positionierkonstruktion (13), die an dem Sockel (11) angeordnet und so konfiguriert ist, dass sie den Drehblock (12) positioniert,
und ferner Folgendes umfasst: eine Abdeckplatte (15), die ein Ende des Sockels (11) abdeckt und ein Eingriffsloch (103) aufweist, wobei ein umlaufender Rand des Eingriffslochs (103) einen Teil des Aufnahmelochs (101) abdeckt und das Eingriffsloch (103) dem Montageloch (102) zugewandt ist, wobei ein anderes Ende des Sockels (11) mit einem Positioniervorsprung (111) versehen ist, wobei der Positioniervorsprung (111) sich zum Positionieren des Drehblocks (12) in das Aufnahmeloch (101) hinein erstreckt und in Dickenrichtung des Sockels (11) der Abdeckplatte (15) gegenüberliegt,
wobei der Drehblock (12) eine erste Positioniernut (105) aufweist, die um das Montageloch (102) herum verläuft,
**dadurch gekennzeichnet, dass** zwei Enden der ersten Positioniernut (105) durch einen ersten Anschlagblock (121) voneinander getrennt sind, und die Abdeckplatte (15) mit einem ersten Positionierabschnitt (151) versehen ist, der in die erste Positioniernut (105) eingebettet ist, wobei der erste Positionierabschnitt (151) entlang der ersten Positioniernut (105) beweglich und so ausgelegt ist, dass er von dem ersten Anschlagblock (121) gestoppt wird.

2. Schalter (1) nach Anspruch 1, wobei: die Abdeckplatte (15) an einem umlaufenden Rand der Abdeckplatte (15) mit mehreren Positionierhaken (152) versehen ist, wobei die mehreren Positionierhaken (152) in Umfangsrichtung der Abdeckplatte (15) in Abständen angeordnet sind, und der Sockel (11) mehrere Rastnuten (104) aufweist, die an einer Außenumfangsfläche des Sockels (11) ausgebildet sind, wobei die mehreren Rastnuten (104) in Umfangsrichtung des Sockels (11) in Abständen angeordnet sind, die mehreren Positionierhaken (152) jeweils den mehreren Rastnuten (104) entsprechen und jeder der mehreren Positionierhaken (152) in eine entsprechende der mehreren Rastnuten (104) eingebettet und am Sockel (11) eingerastet ist.

3. Schalter (1) nach Anspruch 1 oder 2, wobei: der Drehblock (12) mit einem ersten Positionierflansch (123) versehen ist, der sich um das Montageloch (102) herum erstreckt und an einer Innenseite des Eingriffslochs (103) drehbar eingefasst ist, und/oder der Drehblock (12) mit einem zweiten Positionierflansch versehen ist, der sich um das Montageloch (102) herum erstreckt und an einer Innenseite des Positioniervorsprungs (111) drehbar eingefasst ist.

4. Schalter (1) nach einem der Ansprüche 1 bis 3, wobei: der Drehblock (12) mehrere Begrenzungsnuten (106) aufweist, die an einer Außenumfangsfläche des Drehblocks (12) ausgebildet sind, wobei die mehreren Begrenzungsnuten (106) in Umfangsrichtung des Drehblocks (12) in Abständen angeordnet sind, und die Positionierkonstruktion (13) Folgendes umfasst: eine Kugel (131), die in radialer Richtung des Drehblocks (12) zum Positionieren des Drehblocks (12) herausnehmbar in eine der mehreren Begrenzungsnuten (106) eingebettet ist, und ein erstes elastisches Element (132), das mit der Kugel (131) verbunden ist, wobei das elastische Element so konfiguriert ist, dass es eine Kraft ausübt und so die Kugel (131) in radialer Richtung des Drehblocks (12) drückt, damit die Kugel (131) in die Begrenzungsnut (106) eingebettet wird, wobei das Aufnahmeloch (101) wahlweise einen ausgesparten Hohlraum (107) aufweist, der an einer Innenumfangsfläche des Aufnahmelochs (101) ausgebildet ist, wobei die Kugel (131) in den ausgesparten Hohlraum (107) eingebettet ist und zum Einbetten in die Begrenzungsnut (106) zumindest teilweise von einer Innenumfangsfläche des Sockels (11) vorsteht und das elastische Element in den ausgesparten Hohlraum (107) eingebettet ist und zwischen der Kugel (131) und dem Sockel (11) gehalten wird.

5. Schalter (1) nach einem der Ansprüche 1 bis 4, wobei das Montageloch (102) in Form eines nicht kreisrunden Lochs angelegt ist.

6. Schalter (1) nach einem der Ansprüche 1 bis 5, der ferner einen Zündschalter (14) umfasst, der fest mit dem Sockel (11) verbunden ist, wobei wahlweise: ein Gehäuse des Zündschalters (14) und der Sockel (11) einstückig ausgebildet sind und/oder der Zündschalter (14) neben dem Sockel (11) angeordnet und/oder zwischen dem Zündschalter (14) und dem Sockel (11) ein ausgespartes Loch (108) ausgebildet ist, wobei sich ein Betätigungsabschnitt des Zündschalters (14) auf einer Seite des Zündschalters (14) in der Nähe des ausgesparten Lochs (108) befindet und der Schalter (1) ferner eine Übertragungsstange (16) umfasst, die sich durch das ausgesparte Loch (108) erstreckt, wobei bei der Übertragungsstange (16) ein Ende so konfiguriert ist, dass es sich mit dem Ventilschaft (4) verbinden lässt, und ein anderes Ende dem Betätigungsabschnitt zugewandt und so konfiguriert ist, dass es den Zündschalter (14) auslöst, wenn der Ventilschaft (4) gedrückt wird.

7. Hahn (100), der Folgendes umfasst: einen Ventilkörper (2) mit einem Einlass (203) und einem Auslass (204), einen Ventileinsatz (3), der in dem Ventilkörper (2) angeordnet und so konfiguriert ist, dass er durch Drehen einen Öffnungsgrad zwischen dem Einlass (203) und dem Auslass (204) verstellt, einen Ventilschaft (4), der mit dem Ventileinsatz (3) verbunden und so konfiguriert ist, dass er den Ventileinsatz (3) antreibt, und den Schalter (1) nach einem der Ansprüche 1 bis 6, wobei der Ventilschaft (4) mit dem Drehblock (12) verbunden ist.

8. Hahn (100) nach Anspruch 7, wobei: der Ventilkörper (2) einen Aufnahmehohlraum (20) aufweist, wobei der Ventileinsatz (3) in dem Aufnahmehohlraum (20) angeordnet ist; und der Hahn (100) ferner einen Ventilsitz (5) umfasst, der den Aufnahmehohlraum (20) abdeckt und den Ventileinsatz (3) positioniert, wobei der Ventilschaft (4) ein mit dem Ventileinsatz (3) zu verbindendes Ende aufweist, das sich in den Ventilsitz (5) hinein erstreckt, und ein anderes Ende aufweist, das sich aus dem Ventilsitz (5) erstreckt, wobei der Sockel (11) an einer Außenseite des Ventilsitzes (5) angeordnet ist, wobei wahlweise: der Ventilsitz (5) eine zweite Positioniernut (50) aufweist, die an einer Innenseitenfläche des Ventilsitzes (5) ausgebildet ist und sich in Umfangsrichtung des Ventilsitzes (5) erstreckt, wobei zwei Enden der zweiten Positioniernut (50) durch einen zweiten Anschlagblock (51) voneinander getrennt sind; ein Ende des Ventilschafts (4), das sich zur Innenseite des Ventilsitzes (5) erstreckt, mit einem zweiten Positionierabschnitt (41) versehen ist, der in die zweite Positioniernut (50) eingebettet ist, wobei der zweite Positionierabschnitt (41) entlang der zweiten Positioniernut (50) beweglich und so ausgelegt ist, dass er von dem zweiten Anschlagblock (51) gestoppt wird; der Ventilschaft (4) in einer axialen Richtung des Ventilschafts (4) beweglich mit dem Ventileinsatz (3) verbunden ist, wobei der Ventilschaft (4) und der Ventileinsatz (3) in axialer Richtung positioniert sind; der Ventilkörper (2) innen mit einem zweiten elastischen Element versehen ist, das so konfiguriert ist, dass es eine Kraft ausübt und so den Ventilschaft (4) aus dem Ventilsitz (5) drückt; und die zweite Positioniernut (50) eine Kindersicherungsnut (510) aufweist, die an einer oberen Innenfläche der zweiten Positioniernut (50) ausgebildet ist, wobei der zweite Positionierabschnitt (41) so konfiguriert ist, dass er in die Kindersicherungsnut (510) eingebettet ist, wenn der Einlass (203) und der Auslass (204) durch den Ventileinsatz (3) abgetrennt sind.

9. Hahn (100) nach Anspruch 7, der ferner einen Ventilsitz (5) umfasst, der den Ventilkörper (2) abdeckt, wobei der Ventileinsatz (3) zwischen dem Ventilkörper (2) und dem Ventilsitz (5) angeordnet ist, wobei der Schalter (1) den Sockel (11), den Drehblock (12) und die Positionierkonstruktion (13) umfasst, wobei der Sockel (11) und der Ventilsitz (5) eine geteilte Konstruktion aufweisen, wobei der Sockel (11) an einer dem Ventilkörper (2) abgewandten Seite des Ventilsitzes (5) gestapelt und am Ventilsitz (5) eingerastet ist, wobei der Drehblock (12) drehbar in den Sockel (11) eingebettet und die Positionierkonstruktion (13) am Sockel (11) angeordnet und so konfiguriert ist, dass sie den Drehblock (12) positioniert, und der Ventilschaft (4) zum Verbinden mit dem Ventileinsatz (3) zwecks Antreibens des Ventileinsatzes (3) in einer axialen Richtung des Ventilschafts (4) in den Ventilsitz (5) gesteckt und zur Übertragung mit dem Drehblock (12) verbunden ist, wobei wahlweise: der Ventilsitz (5) oder der Sockel (11) mit einem Positionierstift (17) versehen ist und das jeweils andere Element des Ventilsitzes (5) oder des Sockels (11) ein Positionierloch (110) aufweist, wobei sich der Positionierstift (17) axial erstreckt und in axialer Richtung in das Positionierloch (110) eingebettet und der Positionierstift (17) so in das Positionierloch (110) eingepasst ist, dass er den Sockel (11) und den Ventilsitz (5) positioniert, wobei wahlweise: der Positionierstift (17) im Festsitz in dem Positionierloch (110) sitzt oder ein freies Ende des Positionierstifts (17) als Keilfläche (171) konfiguriert ist, die von einer von einem Fixierende des Positionierstifts (17) abgewandten Außenumfangsfläche des Positionierstifts (17) aus schräg verläuft, wobei eine radiale Abmessung des freien Endes des Positionierstifts (17) geringer ist als eine radiale Abmessung des Positionierlochs (110), oder mehrere Positionierstifte (17) und mehrere Positionierlöcher (110) vorgesehen sind, die den mehreren Positionierstiften (17) entsprechen, wobei jeder der mehreren Positionierstifte (17) in ein entsprechendes der mehreren Positionierlöcher (110) eingebettet ist.

10. Hahn (100) nach Anspruch 9, wobei: der Sockel (11) auf einer Seite des Sockels (11) mit einer Backe (18) und der Ventilsitz (5) mit einem Begrenzungsvorsprung (53) versehen ist, wobei die Backe (18) eine in axialer Richtung dem Begrenzungsvorsprung (53) zugewandte Öffnung aufweist und die Backe (18) so konfiguriert ist, dass sie in axialer Richtung am Begrenzungsvorsprung (53) einrastet, wobei wahlweise die Backe (18) einen ersten Hakenabschnitt (181) und einen zweiten Hakenabschnitt (182) umfasst, ein Ende des ersten Hakenabschnitts (181) mit einem Ende des zweiten Hakenabschnitts (182) und dem Sockel (11) verbunden ist, sich ein anderes Ende des ersten Hakenabschnitts (181) und ein anderes Ende des zweiten Hakenabschnitts (182) in axialer Richtung zum Begrenzungsvorsprung (53) erstrecken und zueinander beabstandet sind und der erste Hakenabschnitt (181) und der zweite Hakenabschnitt (182) jeweils so konfiguriert sind, dass sie auf zwei gegenüberliegenden Seiten des Begrenzungsvorsprungs (53) einrasten, wobei wahlweise: der erste Hakenabschnitt (181) mit einem ersten Griffabschnitt (183) versehen ist, der in axialer Richtung mit einem mittleren Teil des ersten Hakenabschnitts (181) verbunden ist, wobei sich der erste Griffabschnitt (183) von dem Ventilsitz (5) weg erstreckt und von dem ersten Hakenabschnitt (181) beabstandet ist und der erste Griffabschnitt (183) auf einer Seite des ersten Hakenabschnitts (181) angeordnet ist, die von dem zweiten Hakenabschnitt (182) abgewandt ist, und/oder der zweite Hakenabschnitt (182) mit einem zweiten Griffabschnitt (184) versehen ist, der in axialer Richtung mit einem mittleren Teil des zweiten Hakenabschnitts (182) verbunden ist, wobei sich der zweite Griffabschnitt (184) von dem Ventilsitz (5) weg erstreckt und von dem zweiten Hakenabschnitt (182) beabstandet ist und der zweite Griffabschnitt (184) auf einer Seite des zweiten Hakenabschnitts (182) angeordnet ist, die von dem ersten Hakenabschnitt (181) abgewandt ist.

11. Hahn (100) nach Anspruch 10, wobei der Schalter (1) ferner einen Zündschalter (14) umfasst, der fest mit dem Sockel (11) verbunden ist, wobei die Backe (18) und der Zündschalter (14) jeweils auf zwei gegenüberliegenden Seiten des Sockels (11) angeordnet sind.

12. Hahn (100) nach einem der Ansprüche 9 bis 11, wobei: der Sockel (11) auf den beiden gegenüberliegenden Seiten des Sockels (11) mit einem ersten Klemmelement (191) beziehungsweise einem zweiten Klemmelement (192) versehen ist, wobei jedes des ersten Klemmelements (191) und des zweiten Klemmelements (192) ein Ende aufweist, das mit dem Sockel (11) verbunden ist, und ein anderes Ende aufweist, das sich in axialer Richtung zum Ventilsitz (5) hin erstreckt; und der Ventilsitz (5) mit einer ersten Lasche (551) und einer zweiten Lasche (552) versehen ist, wobei die erste Lasche (551) in axialer Richtung dem ersten Klemmelement (191) zugewandt ist, die zweite Lasche (552) in axialer Richtung dem zweiten Klemmelement (192) zugewandt ist, das erste Klemmelement (191) so konfiguriert ist, dass es in axialer Richtung in die erste Lasche (551) einrastet, und das zweite Klemmelement (192) so konfiguriert ist, dass es in axialer Richtung in die zweite Lasche (552) einrastet, wobei wahlweise das erste Klemmelement (191) und das zweite Klemmelement (192) in einer vom Sockel (11) abgewandten axialen Richtung voneinander weg geneigt sind, wobei wahlweise: die erste Lasche (551) ein erstes Positionierloch (501) aufweist, wobei das erste Positionierloch (501) als schräges Loch angelegt ist, welches in Bezug auf die axiale Richtung schräg ist, und eine Neigungsrichtung des ersten Positionierlochs (501) einer Neigungsrichtung des ersten Klemmelements (191) entspricht und/oder die zweite Lasche (552) ein zweites Positionierloch (502) aufweist, wobei das zweite Positionierloch (502) als schräges Loch angelegt ist, welches in Bezug auf die axiale Richtung schräg ist, und eine Neigungsrichtung des zweiten Positionierlochs (502) einer Neigungsrichtung des zweiten Klemmelements (192) entspricht.

13. Gasvorrichtung, die den Hahn (100) nach einem der Ansprüche 7 bis 12 umfasst.

## Revendications

1. Commutateur à engrenages (1) pour un robinet à tournant (100), le robinet à tournant (100) comportant : un corps de robinet (2) ayant une entrée (203) et une sortie (204) ; un noyau de robinet (3) disposé dans le corps de robinet (2) et configuré pour ajuster un degré d'ouverture entre l'entrée (203) et la sortie (204) par rotation ; et une tige de robinet (4) reliée au noyau de robinet (3) et configurée pour entraîner le noyau de robinet (3), le commutateur à engrenages (1) comportant : une base (11) ayant un trou de réception (101) ; un bloc de rotation (12) disposé de manière rotative dans le trou de réception (101) et ayant un trou de montage (102) configuré pour coopérer avec la tige de robinet (4) pour permettre au bloc de rotation (12) de tourner en même temps que la tige de robinet (4) ; et une structure de positionnement (13) disposée au niveau de la base (11) et configurée pour positionner le bloc de rotation (12) ;
comportant par ailleurs une plaque de recouvrement (15) recouvrant une extrémité de la base (11) et comportant un trou de mise en prise (103), un bord périphérique du trou de mise en prise (103) recouvrant une partie du trou de réception (101), et le trou de mise en prise (103) étant orienté vers le trou de montage (102), dans lequel une autre extrémité de la base (11) est dotée d'une partie saillante de positionnement (111), la partie saillante de positionnement (111) s'étendant jusque dans le trou de réception (101) et étant opposée à la plaque de recouvrement (15) dans une direction allant dans le sens de l'épaisseur de la base (11) pour positionner le bloc de rotation (12) ;
dans lequel le bloc de rotation (12) a une première rainure de positionnement (105) s'étendant autour du trou de montage (102),
**caractérisé en ce que** deux extrémités de la première rainure de positionnement (105) sont séparées par un premier bloc de butée (121) ; et la plaque de recouvrement (15) est dotée d'une première partie de positionnement (151) encastrée jusque dans la première rainure de positionnement (105), la première partie de positionnement (151) étant mobile le long de la première rainure de positionnement (105) et adaptée pour être arrêtée par le premier bloc de buté (121).

2. Commutateur à engrenages (1) selon la revendication 1, dans lequel : la plaque de recouvrement (15) est dotée d'une pluralité de crochets de positionnement (152) au niveau d'un bord périphérique de la plaque de recouvrement (15), les crochets de la pluralité de crochets de positionnement (152) étant agencés selon des intervalles dans une direction allant dans le sens de la circonférence de la plaque de recouvrement (15) ; et la base (11) a une pluralité de rainures d'encliquetage (104) formées au niveau d'une surface périphérique extérieure de la base (11), les rainures de la pluralité de rainures d'encliquetage (104) sont agencées selon des intervalles dans une direction allant dans le sens de la circonférence de la base (11), les crochets de la pluralité de crochets de positionnement (152) correspondant à la pluralité de rainures d'encliquetage (104), respectivement, et chaque crochet de la pluralité de crochets de positionnement (152) étant encastré jusque dans une rainure correspondante de la pluralité de rainures d'encliquetage (104) et se trouvant ajusté par encliquetage avec la base (11).

3. Commutateur à engrenages (1) selon la revendication 1 ou la revendication 2, dans lequel : le bloc de rotation (12) est doté d'une première bride de positionnement (123) s'étendant autour du trou de montage (102) et revêtue de manière rotative sur un côté intérieur du trou de mise en prise (103) ; et/ou le bloc de rotation (12) est doté d'une deuxième bride de positionnement s'étendant autour du trou de montage (102) et revêtue de manière rotative sur un côté intérieur de la partie saillante de positionnement (111).

4. Commutateur à engrenages (1) selon l'une quelconque des revendications 1 à 3, dans lequel : le bloc de rotation (12) a une pluralité de rainures de limite (106) formées sur une surface périphérique extérieure du bloc de rotation (12), les rainures de la pluralité de rainures de limite (106) étant agencées selon des intervalles dans une direction allant dans le sens de la circonférence du bloc de rotation (12) ; et la structure de positionnement (13) comporte : une bille (131) encastrée de manière amovible jusque dans une rainure de la pluralité de rainures de limite (106) dans une direction radiale du bloc de rotation (12) pour positionner le bloc de rotation (12) ; et un premier élément élastique (132) relié à la bille (131), l'élément élastique étant configuré pour exercer une force pour pousser la bille (131) dans la direction radiale du bloc de rotation (12) afin de permettre à la bille (131) d'être encastrée jusque dans la rainure de limite (106), éventuellement, dans lequel le trou de réception (101) a une cavité à renfoncement (107) formée au niveau d'une surface circonférentielle intérieure du trou de réception (101), la bille (131) étant encastrée jusque dans la cavité à renfoncement (107) et dépassant au moins partiellement depuis une surface périphérique intérieure de la base (11) pour être encastrée jusque dans la rainure de limite (106), et l'élément élastique étant encastré jusque dans la cavité à renfoncement (107) et supporté entre la bille (131) et la base (11).

5. Commutateur à engrenages (1) selon l'une quelconque des revendications 1 à 4, dans lequel le trou de montage (102) est construit en une forme de trou non circulaire.

6. Commutateur à engrenages (1) selon l'une quelconque des revendications 1 à 5, comportant par ailleurs un commutateur d'allumage (14) relié de manière fixe à la base (11), éventuellement, dans lequel : un boîtier du commutateur d'allumage (14) et la base (11) sont formés d'un seul tenant ; et/ou le commutateur d'allumage (14) est agencé côte à côte par rapport à la base (11) ; et/ou un trou à renfoncement (108) est formé entre le commutateur d'allumage (14) et la base (11), une partie d'actionnement du commutateur d'allumage (14) étant située au niveau d'un côté du commutateur d'allumage (14) à proximité du trou à renfoncement (108) ; et le commutateur à engrenages (1) comporte par ailleurs une tige de transmission (16) passant au travers du trou à renfoncement (108), la tige de transmission (16) ayant une extrémité configurée pour être reliée à la tige de robinet (4) et une autre extrémité orientée vers la partie d'actionnement et configurée pour déclencher le commutateur d'allumage (14) quand la tige de robinet (4) est enfoncée.

7. Robinet à tournant (100) comportant : un corps de robinet (2) ayant une entrée (203) et une sortie (204) ; un noyau de robinet (3) disposé dans le corps de robinet (2) et configuré pour ajuster un degré d'ouverture entre l'entrée (203) et la sortie (204) par rotation ; une tige de robinet (4) reliée au noyau de robinet (3) et configurée pour entraîner le noyau de robinet (3) ; et le commutateur à engrenages (1) selon l'une quelconque des revendications 1 à 6, la tige de robinet (4) étant reliée au bloc de rotation (12).

8. Robinet à tournant (100) selon la revendication 7, dans lequel : le corps de robinet (2) a une cavité de réception (20), le noyau de robinet (3) étant disposé dans la cavité de réception (20) ; et le robinet à tournant (100) comporte par ailleurs un siège de robinet (5) recouvrant la cavité de réception (20) et positionnant le noyau de robinet (3), la tige de robinet (4) ayant une extrémité s'étendant jusque dans le siège de robinet (5) pour être reliée au noyau de robinet (3) et une autre extrémité s'étendant hors du siège de robinet (5), dans lequel la base (11) est empilée au niveau d'un côté extérieur du siège de robinet (5), éventuellement, dans lequel : le siège de robinet (5) a une deuxième rainure de positionnement (50) formée au niveau d'une surface latérale intérieure du siège de robinet (5) et s'étendant dans une direction allant dans le sens de la circonférence du siège de robinet (5), deux extrémités de la deuxième rainure de positionnement (50) étant séparées par un deuxième bloc de butée (51) ; une extrémité de la tige de robinet (4) s'étendant jusque dans le côté intérieur du siège de robinet (5) est dotée d'une deuxième partie de positionnement (41) encastrée jusque dans la deuxième rainure de positionnement (50), la deuxième partie de positionnement (41) étant mobile le long de la deuxième rainure de positionnement (50) et adaptée pour être arrêtée par le deuxième bloc de butée (51) ; la tige de robinet (4) est reliée de manière mobile au noyau de robinet (3) dans une direction axiale de la tige de robinet (4), la tige de robinet (4) et le noyau de robinet (3) étant positionnés dans la direction axiale ; le corps de robinet (2) est doté intérieurement d'un deuxième élément élastique, le deuxième élément élastique étant configuré pour exercer une force pour pousser la tige de robinet (4) afin qu'elle s'étende hors du siège de robinet (5) ; et la deuxième rainure de positionnement (50) a une rainure de verrouillage enfant (510) formée au niveau d'une surface supérieure intérieure de la deuxième rainure de positionnement (50), la deuxième partie de positionnement (41) étant configurée pour être encastrée jusque dans la rainure de verrouillage enfant (510) quand l'entrée (203) et la sortie (204) sont séparées par le noyau de robinet (3).

9. Robinet à tournant (100) selon la revendication 7, comportant par ailleurs un siège de robinet (5) recouvrant le corps de robinet (2), le noyau de robinet (3) étant disposé entre le corps de robinet (2) et le siège de robinet (5), dans lequel le commutateur à engrenages (1) comporte la base (11), le bloc de rotation (12) et la structure de positionnement (13), la base (11) et le siège de robinet (5) ayant la forme d'une structure fendue, la base (11) étant empilée au niveau d'un côté du siège de robinet (5) orienté à l'opposé du corps de robinet (2) et encliquetée sur le siège de robinet (5), le bloc de rotation (12) étant encastré de manière rotative jusque dans la base (11), et la structure de positionnement (13) étant disposée au niveau de la base (11) et configurée pour positionner le bloc de rotation (12) ; et la tige de robinet (4) est insérée jusque dans le siège de robinet (5) dans une direction axiale de la tige de robinet (4) à relier au noyau de robinet (3) pour entraîner le noyau de robinet (3), et est en liaison de transmission avec le bloc de rotation (12), éventuellement, dans lequel : l'un parmi le siège de robinet (5) et la base (11) est doté d'un montant de positionnement (17), et l'autre parmi le siège de robinet (5) et la base (11) a un trou de positionnement (110), le montant de positionnement (17) s'étendant axialement et étant encastré jusque dans le trou de positionnement (110) dans la direction axiale, et le montant de positionnement (17) étant ajusté avec le trou de positionnement (110) pour positionner la base (11) et le siège de robinet (5), éventuellement, dans lequel : le montant de positionnement (17) est en ajustement serré avec le trou de positionnement (110) ; ou une extrémité libre du montant de positionnement (17) est configurée sous la forme d'une surface cunéiforme (171) qui va en se rétrécissant depuis une surface périphérique extérieure du montant de positionnement (17) à l'opposé d'une extrémité de fixation du montant de positionnement (17), une dimension radiale de l'extrémité libre du montant de positionnement (17) étant inférieure à une dimension radiale du trou de positionnement (110) ; ou une pluralité de montants de positionnement (17) est mise en œuvre, et une pluralité de trous de positionnement (110) est mise en œuvre et correspond à la pluralité de montants de positionnement (17), chaque montant de la pluralité de montants de positionnement (17) étant encastré jusque dans un trou correspondant de la pluralité de trous de positionnement (110).

10. Robinet à tournant (100) selon la revendication 9, dans lequel : la base (11) est dotée d'une mâchoire (18) sur un côté de la base (11) ; et le siège de robinet (5) est doté d'une partie saillante de limite (53), la mâchoire (18) ayant une ouverture orientée vers la partie saillante de limite (53) dans la direction axiale, et la mâchoire (18) étant configurée pour être encliquetée avec la partie saillante de limite (53) dans la direction axiale, éventuellement, dans lequel la mâchoire (18) comporte une première partie de crochet (181) et une deuxième partie de crochet (182), une extrémité de la première partie de crochet (181) étant reliée à une extrémité de la deuxième partie de crochet (182) et à la base (11), une autre extrémité de la première partie de crochet (181) et une autre extrémité de la deuxième partie de crochet (182) s'étendant vers la partie saillante de limite (53) dans la direction axiale et étant espacées l'une de l'autre, et la première partie de crochet (181) et la deuxième partie de crochet (182) étant configurées pour être encliquetées avec deux côtés opposés de la partie saillante de limite (53), respectivement, éventuellement, dans lequel : la première partie de crochet (181) est dotée d'une première partie de poignée (183) reliée à une partie médiane de la première partie de crochet (181) dans la direction axiale, la première partie de poignée (183) s'étendant à l'opposé du siège de robinet (5) et étant espacée de la première partie de crochet (181), et la première partie de poignée (183) étant disposée au niveau d'un côté de la première partie de crochet (181) orientée à l'opposé de la deuxième partie de crochet (182) ; et/ou la deuxième partie de crochet (182) est dotée d'une deuxième partie de poignée (184) reliée à une partie médiane de la deuxième partie de crochet (182) dans la direction axiale, la deuxième partie de poignée (184) s'étendant à l'opposé du siège de robinet (5) et étant espacée de la deuxième partie de crochet (182), et la deuxième partie de poignée (184) étant disposée au niveau d'un côté de la deuxième partie de crochet (182) orientée à l'opposé de la première partie de crochet (181).

11. Robinet à tournant (100) selon la revendication 10, dans lequel le commutateur à engrenages (1) comporte par ailleurs un commutateur d'allumage (14) relié de manière fixe à la base (11), la mâchoire (18) et le commutateur d'allumage (14) étant disposés au niveau de deux côtés opposés de la base (11), respectivement.

12. Robinet à tournant (100) selon l'une quelconque des revendications 9 à 11, dans lequel : la base (11) est dotée d'une première boucle (191) et d'une deuxième boucle (192) au niveau des deux côtés opposés de la base (11) respectivement, dans lequel chacune parmi la première boucle (191) et la deuxième boucle (192) a une extrémité reliée à la base (11) et une autre extrémité s'étendant vers le siège de robinet (5) dans la direction axiale ; et le siège de robinet (5) est doté d'un premier ergot (551) et d'un deuxième ergot (552), le premier ergot (551) étant orienté vers la première boucle (191) dans la direction axiale, le deuxième ergot (552) étant orienté vers la deuxième boucle (192) dans la direction axiale, la première boucle (191) étant configurée pour être encliquetée jusque dans le premier ergot (551) dans la direction axiale, et la deuxième boucle (192) étant configurée pour être encliquetée jusque dans le deuxième ergot (552) dans la direction axiale, éventuellement, dans lequel dans une direction axiale allant à l'opposé de la base (11), la première boucle (191) et la deuxième boucle (192) sont inclinées à l'opposé l'une de l'autre, éventuellement, dans lequel : le premier ergot (551) a un premier trou de positionnement (501), le premier trou de positionnement (501) étant construit sous la forme d'un trou incliné qui est incliné par rapport à la direction axiale, et une direction d'inclinaison du premier trou de positionnement (501) étant identique à une direction d'inclinaison de la première boucle (191) : et/ou le deuxième ergot (552) a un deuxième trou de positionnement (502), le deuxième trou de positionnement (502) étant construit sous la forme d'un trou incliné qui est incliné par rapport à la direction axiale, une direction d'inclinaison du deuxième trou de positionnement (502) étant identique à une direction d'inclinaison de la deuxième boucle (192).

13. Dispositif à gaz, comportant le robinet à tournant (100) selon l'une quelconque des revendications 7 à 12.
